(19) Europäisches Patentamt
European Patent Office
Office européen des brevets

(11) EP 3 543 736 A1

(12) EUROPEAN PATENT APPLICATION
published in accordance with Art. 153(4) EPC

(43) Date of publication:
25.09.2019 Bulletin 2019/39

(51) Int Cl.:
G01S 13/93 (2006.01)     G01S 7/282 (2006.01)
G05D 1/02 (2006.01)      B60R 21/0134 (2006.01)

(21) Application number: 17870976.2

(22) Date of filing: 17.11.2017

(86) International application number:
PCT/KR2017/013080

(87) International publication number:
WO 2018/093192 (24.05.2018 Gazette 2018/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 21.11.2016 US 201662424715 P

(71) Applicant: LG Electronics Inc.
Seoul 07336 (KR)

(72) Inventors:
• LEE, Heuideok
Seoul 07336 (KR)
• JEON, Kyeongjin
Seoul 07336 (KR)
• KIM, Sungjoo
Seoul 07336 (KR)
• TAYLOR, David
Seoul 07336 (KR)
• LEE, Gyeongeon
Seoul 07336 (KR)

(74) Representative: Vossius & Partner
Patentanwälte Rechtsanwälte mbB
Siebertstrasse 3
81675 München (DE)

(54) VEHICLE RADAR DEVICE AND VEHICLE

(57) The present invention relates to a radar apparatus for vehicle comprising: a transmission unit configured to transmit a transmission signal; a reception unit configured to receive a reception signal that is a reflected transmission signal by an object; and a processor configured to process the reception signal, wherein the transmission unit comprises: a plurality of transmission antennas; and a code generator configured to assign a different code to each of the plurality of antennas, wherein the reception unit comprises a plurality of reception antennas, each of which receives a reception signal based on a signal transmitted from each of the plurality of transmission antennas.

FIG. 1

# Description

[Technical Field]

The present invention relates to a vehicle radar apparatus, and a vehicle including the same.

[Background Art]

A vehicle is an apparatus that moves in a direction desired by a user riding therein. A representative example of a vehicle is an automobile.

Meanwhile, a variety of sensors and electronic devices are provided for convenience of a user who uses the vehicle. In particular, for driving convenience of user, an Advanced Driver Assistance System (ADAS) has been actively studied. In addition, development of autonomous vehicles has been vigorously accomplished.

In addition, researches on sensors mounted in autonomous vehicles have been actively conducted. The sensors mounted in autonomous vehicles include cameras, infrared sensors, radar, GPS, lidar, and gyroscope, and radar is an important sensor for object detection.

Meanwhile, in the radar provided in a vehicle according to the related art, there is a problem in that the angle between the vehicle and the object is not properly detected.

Further, in order to detect the angle between the vehicle and the object, a plurality of antennas are required, and accordingly, the size of the radar apparatus becomes large, which causes a problem in mounting the radar apparatus on the vehicle.

[Disclosure]

[Technical Problem]

The present invention has been made in view of the above problems, and it is an object of the present invention is to provide a vehicle radar apparatus which can detect an angle between a vehicle and an object and can be manufactured relatively small.

It is another object of the present invention to provide a vehicle including the vehicle radar apparatus.

The problems of the present invention are not limited to the above-mentioned problems, and other problems not mentioned can be clearly understood by those skilled in the art from the following description.

[Technical Solution]

In an aspect, there is provided a radar apparatus for vehicle including: a transmission unit configured to transmit a transmission signal; a reception unit configured to receive a reception signal that is a reflected transmission signal by an object; and a processor configured to process the reception signal, wherein the transmission unit includes: a plurality of transmission antennas; and a code generator configured to assign a different code to each of the plurality of antennas, wherein the reception unit includes a plurality of reception antennas, each of which receives a reception signal based on a signal transmitted from each of the plurality of transmission antennas.

The details of embodiments are included in the detailed description and drawings.

[Advantageous Effects]

According to an embodiment of the present invention, there is one or more of the following effects.

First, the angle between the vehicle and the object can be easily detected.

Second, a radar apparatus is implemented by using a plurality of array antennas, and a relatively small vehicle radar apparatus is provided, which is advantageous in mounting the radar in a vehicle.

Thirdly, data corresponding to several times of the reception antennas provided are acquired to enhance the accuracy of data.

The effects of the present invention are not limited to the effects mentioned above, and other effects not mentioned may be clearly understood by those skilled in the art from the description of the claims.

[Description of Drawings]

FIG. 1 is a diagram illustrating the external appearance of a vehicle according to an embodiment of the present invention.
FIG. 2 is different angled views of the external appearance of a vehicle according to an embodiment of the present invention.
FIGS. 3 and 4 are diagrams illustrating the interior configuration of a vehicle according to an embodiment of the present invention.
FIGS. 5 and 6 are diagrams illustrating an object according to an embodiment of the present invention.
FIG. 7 is a block diagram illustrating a vehicle according to an embodiment of the present invention.
FIG. 8 is a diagram illustrating an example of a transmission signal according to an embodiment of the present invention.
FIG. 9 is a diagram illustrating a transmission frequency and a reception frequency according to an embodiment of the present invention.
FIG. 10 is a diagram illustrating a beat frequency according to an embodiment of the present invention.
FIG. 11 is a diagram illustrating the principle of detecting distance and speed by using a beat frequency according to an embodiment of the present invention.

FIG. 12 is a diagram illustrating a vehicle radar apparatus according to an embodiment of the present invention.

FIG. 13 is a diagram illustrating the arrangement of a plurality of transmission antennas and the arrangement of a plurality of reception antennas according to an embodiment of the present invention.

FIGS. 14 and 15 are diagrams illustrating a code of each of a plurality of transmission antennas of a vehicle radar apparatus according to an embodiment of the present invention.

FIG. 16 is a diagram illustrating a case of one transmission antenna and three reception antennas according to an embodiment of the present invention.

FIG. 17 is a diagram illustrating a case of three transmission antennas and one reception antenna according to an embodiment of the present invention.

FIG. 18 is a diagram illustrating the operation of the vehicle radar apparatus according to an embodiment of the present invention.

FIG. 19 is a diagram illustrating a 2D spectrum of a signal acquired through a virtual array reception antenna (e.g., a fourth embodiment of FIG. 13) including twelve reception antennas according to an embodiment of the present invention.

FIG. 20 is a diagram illustrating a phase distribution based on a reception signal according to an embodiment of the present invention.

FIGS. 21 and 22 are diagrams illustrating the arrangement of a plurality of transmission antennas and a plurality of reception antennas according to an embodiment of the present invention.

[Mode for Invention]

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents and substitutions included in the scope and sprit of the present invention.

Although the terms "first," "second," etc., may be used herein to describe various components, these components should not be limited by these terms. These terms are only used to distinguish one component from another component. When a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise. In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the traveling direction of the vehicle, and "the right side of the vehicle" refers to the right side in the traveling direction of the vehicle.

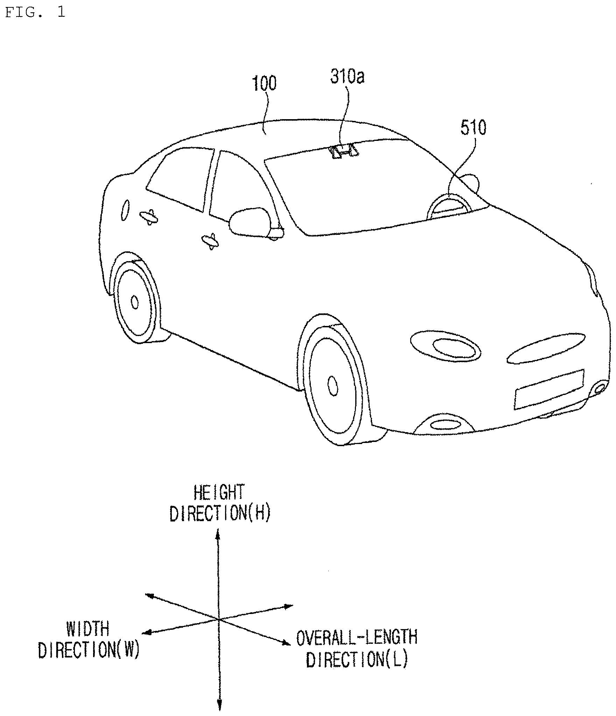

FIG. 1 is a diagram illustrating the external appearance of a vehicle according to an embodiment of the present invention.

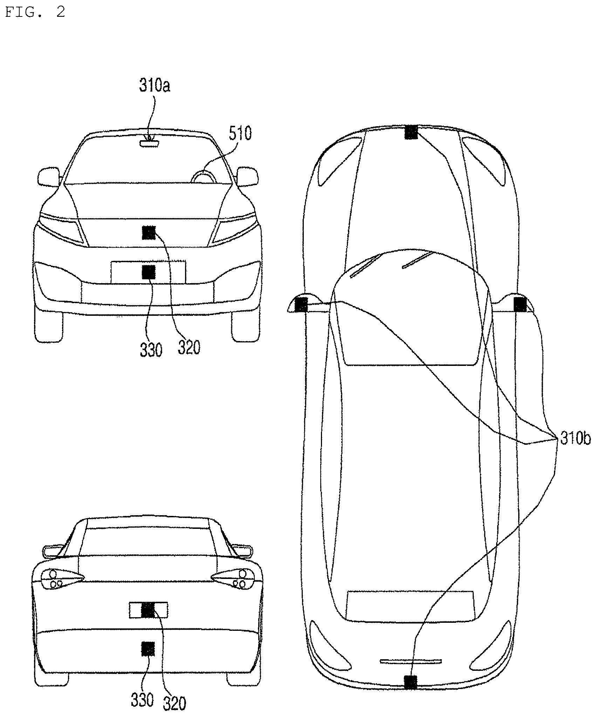

FIG. 2 is different angled views of the external appearance of a vehicle according to an embodiment of the present invention.

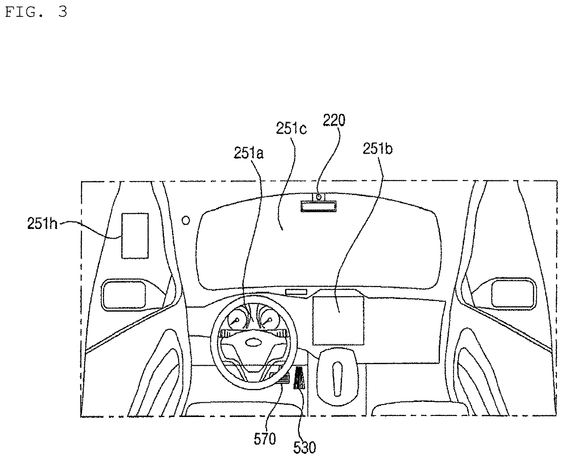

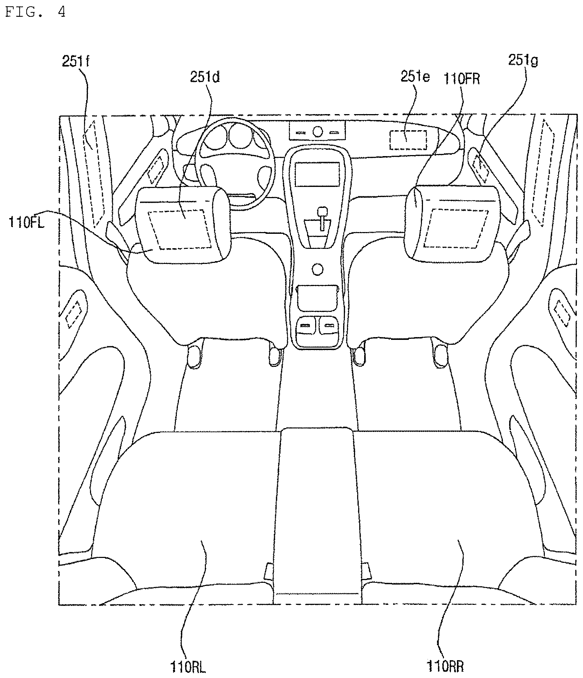

FIGS. 3 and 4 are diagrams illustrating the interior configuration of a vehicle according to an embodiment of the present invention.

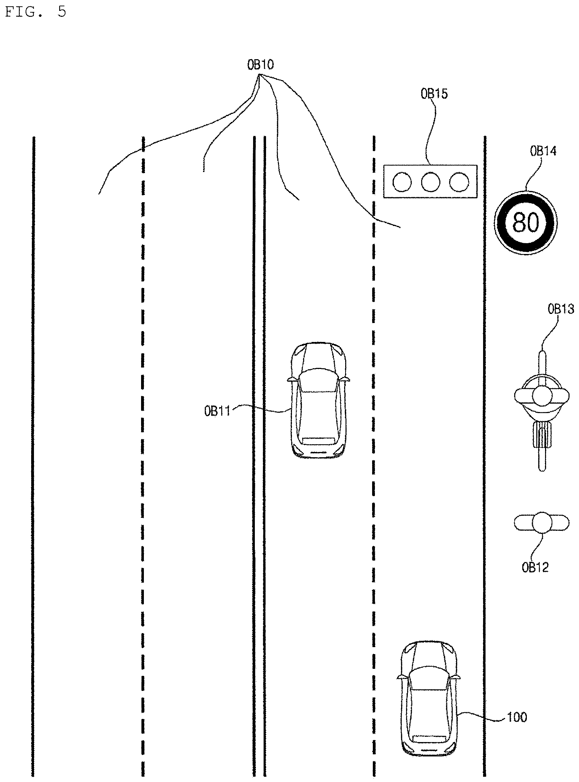

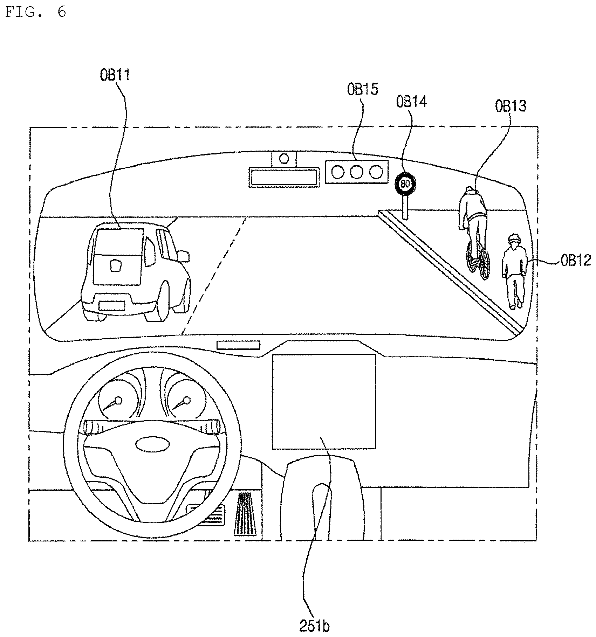

FIGS. 5 and 6 are diagrams illustrating an object according to an embodiment of the present invention.

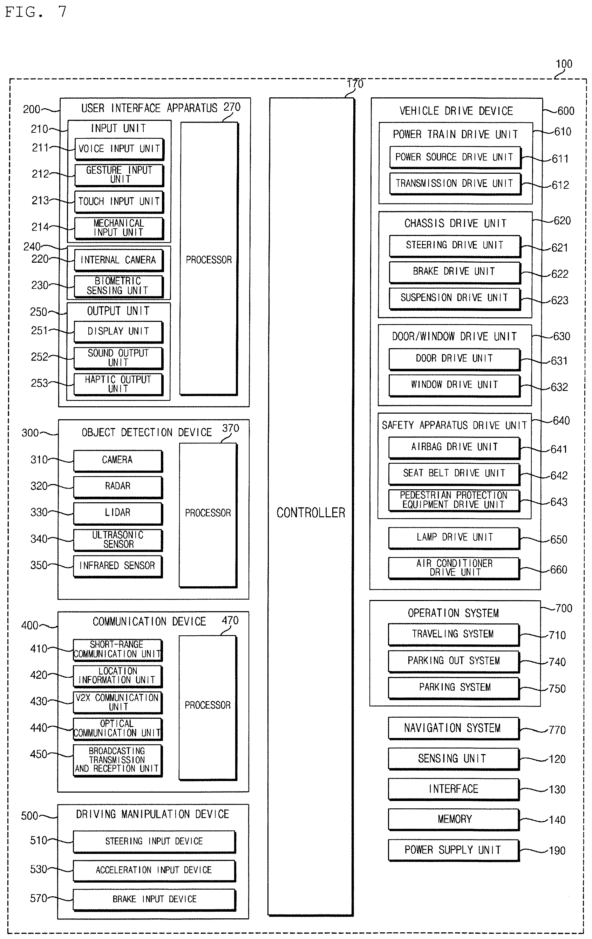

FIG. 7 is a block diagram illustrating a vehicle according to an embodiment of the present invention.

Referring to FIGS. 1 to 7, a vehicle 100 may include a wheel rotated by a power source, and a steering input device 510 for controlling a traveling direction of the vehicle 100.

The vehicle 100 may be an autonomous vehicle.

The vehicle 100 may be switched to an autonomous traveling mode or a manual mode, based on a user input.

For example, based on a user input received through a user interface apparatus 200, the vehicle 100 may be switched from a manual mode to an autonomous traveling mode, or vice versa.

The vehicle 100 may also be switched to an autonomous traveling mode or a manual mode based on traveling state information.

The traveling state information may include on at least one of information on an object outside the vehicle 100, navigation information, and vehicle condition information.

For example, the vehicle 100 may be switched from the manual mode to the autonomous traveling mode, or vice versa, based on traveling state information generated by the object detection device 300.

For example, the vehicle 100 may be switched from the manual mode to the autonomous traveling mode, or vice versa, based on traveling state information received through a communication device 400.

The vehicle 100 may be switched from the manual mode to the autonomous traveling mode, or vice versa, based on information, data, and a signal provided from an external device.

When the vehicle 100 operates in the autonomous traveling mode, the autonomous vehicle 100 may operate based on an operation system 700.

For example, the autonomous vehicle 100 may operate based on information, data, or signal generated by a traveling system 710, a parking out system 740, and a parking system 750.

While operating in the manual mode, the autonomous vehicle 100 may receive a user input for driving of the vehicle 100 through a driving manipulation device 500. Based on the user input received through the driving manipulation device 500, the vehicle 100 may operate.

The term "overall length" means the length from the front end to the rear end of the vehicle 100, the term "width" means the width of the vehicle 100, and the term "height" means the length from the bottom of the wheel to the roof. In the following description, the term "overall length direction L" may mean the reference direction for the measurement of the overall length of the vehicle 100, the term "width direction W" may mean the reference direction for the measurement of the width of the vehicle 100, and the term "height direction H" may mean the reference direction for the measurement of the height of the vehicle 100.

Meanwhile, the overall length direction L may be understood as an azimuth direction and may be understood as a width direction W, an high-angle direction.

Meanwhile, the azimuth direction may be understood as a horizontal direction in the vehicle radar apparatus 320, and the high-angle direction may be understood as a vertical direction in the vehicle radar apparatus 320.

As illustrated in FIG. 7, the vehicle 100 may include the user interface apparatus 200, the object detection device 300, the communication device 400, the driving manipulation device 500, a vehicle drive device 600, the operation system 700, a navigation system 770, a sensing unit 120, an interface 130, a memory 140, a controller 170, and a power supply unit 190.

According to an embodiment, the vehicle 100 may further include other components in addition to the components mentioned in this specification, or may not include some of the mentioned components.

The user interface apparatus 200 is provided to support communication between the vehicle 100 and a user. The user interface apparatus 200 may receive a user input, and provide information generated in the vehicle 100 to the user. The vehicle 100 may implement User Interfaces (UI) or User Experience (UX) through the user interface apparatus 200.

The user interface apparatus 200 may include an input unit 210, an internal camera 220, a biometric sensing unit 230, an output unit 250, and a processor 270.

According to an embodiment, the user interface apparatus 200 may further include other components in addition to the mentioned components, or may not include some of the mentioned components.

The input unit 210 is configured to receive information from a user, and data collected in the input unit 210 may be analyzed by the processor 270 and then processed by a control command of the user.

The input unit 210 may be disposed inside the vehicle 100. For example, the input unit 210 may be disposed in an area of a steering wheel, an area of an instrument panel, an area of a seat, an area of each pillar, an area of a door, an area of a center console, an area of a head lining, an area of a sun visor, an area of a windshield, or an area of a window.

The input unit 210 may include a voice input unit 211, a gesture input unit 212, a touch input unit 213, and a mechanical input unit 214.

The voice input unit 211 may convert a voice input of a user into an electrical signal. The converted electrical signal may be provided to the processor 270 or the controller 170.

The voice input unit 211 may include one or more microphones.

The gesture input unit 212 may convert a gesture input of a user into an electrical signal. The converted electrical signal may be provided to the processor 270 or the controller 170.

The gesture input unit 212 may include at least one of an infrared sensor and an image sensor for sensing a gesture input of a user.

According to an embodiment, the gesture input unit 212 may sense a three-dimensional (3D) gesture input of a user. To this end, the gesture input unit 212 may include a plurality of light emitting units for outputting infrared light, or a plurality of image sensors.

The gesture input unit 212 may sense the 3D gesture input by employing a Time of Flight (TOF) scheme, a structured light scheme, or a disparity scheme.

The touch input unit 213 may convert a user's touch input into an electrical signal, and the converted electrical signal may be provided to the processor 270 or the controller 170.

The touch input unit 213 may include a touch sensor for sensing a touch input of a user.

According to an embodiment, the touch input unit 210 may be integrally formed with a display unit 251 to implement a touch screen. Such a touch screen may provide an input interface and an output interface between the vehicle 100 and the user.

The mechanical input unit 214 may include at least one of a button, a dome switch, a jog wheel, and a jog switch. An electrical signal generated by the mechanical input unit 214 may be provided to the processor 270 or the controller 170.

The mechanical input unit 214 may be disposed on a steering wheel, a center fascia, a center console, a cockpit module, a door, etc.

The internal camera 220 may acquire images of the inside of the vehicle 100. The processor 270 may sense a user's state based on the images of the inside of the vehicle. The processor 270 may acquire information on an eye gaze of the user from the images of the inside of the vehicle. The processor 270 may sense a gesture of the user from the images of the inside of the vehicle.

The biometric sensing unit 230 may acquire biometric information of the user. The biometric sensing unit 230 may include a sensor for acquiring biometric information of the user, and may acquire finger print information, heartbeat information, and the like of the user by using the sensor. The biometric information may be used for user authentication.

The output unit 250 is configured to generate an output related to visual, auditory, or tactile sense.

The output unit 250 may include at least one of a display unit 251, a sound output unit 252, and a haptic output unit 253.

The display unit 251 may display graphic objects corresponding to various types of information.

The display unit 251 may include at least one of a Liquid Crystal Display (LCD), a Thin Film Transistor-Liquid Crystal Display (TFT LCD), an Organic Light-Emitting Diode (OLED), a flexible display, a 3D display, and an e-ink display.

The display unit 251 may form a mutual layer structure together with the touch input unit 213, or may be integrally formed with the touch input unit 213 to implement a touch screen.

The display unit 251 may be implemented as a Head Up Display (HUD). When implemented as a HUD, the display unit 251 may include a projector module in order to output information through an image projected on a windshield or a window.

The display unit 251 may include a transparent display. The transparent display may be attached on the windshield or the window.

The transparent display may display a certain screen with a certain transparency. In order to achieve the transparency, the transparent display may include at least one of a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display may be adjustable.

Meanwhile, the user interface apparatus 200 may include a plurality of display units 251a to 251g.

The display unit 251 may be disposed in an area of a steering wheel, an area 251a, 251b, or 251e of an instrument panel, an area 251d of a seat, an area 251f of each pillar, an area 251g of a door, an area of a center console, an area of a head lining, an area of a sun visor, an area 251c of a windshield, or an area 251h of a window.

The sound output unit 252 converts an electrical signal from the processor 270 or the controller 170 into an audio signal, and outputs the audio signal. To this end, the sound output unit 252 may include one or more speakers.

The haptic output unit 253 generates a tactile output. For example, the haptic output unit 253 may operate to vibrate a steering wheel, a safety belt, and seats 110FL, 110FR, 110RL, and 110RR so as to allow a user to recognize the output.

The processor 270 may control the overall operation of each unit of the user interface apparatus 200.

According to an embodiment, the user interface apparatus 200 may include a plurality of processors 270 or may not include the processor 270.

When the user interface apparatus 200 does not include the processor 270, the user interface apparatus 200 may operate under the control of the controller 170 or a processor of other device inside the vehicle 100.

Meanwhile, the user interface apparatus 200 may be referred to as a display device for vehicle.

The user interface apparatus 200 may operate under the control of the controller 170.

The object detection device 300 is an apparatus for detecting an object disposed outside the vehicle 100. The object detection device 300 may generate object information based on sensing data.

The object information may include information related to existence of an object, location information of an object, information on a distance between the vehicle 10 and the object, and information on relative speed of the vehicle 100 and the object.

The object may be various objects related to travelling of the vehicle 100.

Referring to FIGS. 5 and 6, an object o may include a lane OB10, a nearby vehicle OB11, a pedestrian OB12, a two-wheeled vehicle OB13, a traffic signal OB14 and OB15, a light, a road, a structure, a bump, a geographical feature, an animal, etc.

The lane OB10 may be a traveling lane, a side lane of the traveling lane, or a lane on which the opposed vehicle travels. The lane OB10 may be left and right lines that define the lane. The lane may include an intersection.

The nearby vehicle OB11 may be a vehicle that is travelling in the vicinity of the vehicle 100. The nearby vehicle OB11 may be a vehicle within a certain distance from the vehicle 100. For example, the nearby vehicle OB11 may be a vehicle that is preceding or following the vehicle 100.

The pedestrian OB12 may be a person in the vicinity of the vehicle 100. The pedestrian OB12 may be a person within a certain distance from the vehicle 100. For example, the pedestrian OB12 may be a person on a sidewalk or on the roadway.

The two-wheeled vehicle OB13 may be a vehicle that is disposed in the vicinity of the vehicle 100 and moves by using two wheels. The two-wheeled vehicle OB13 may be a vehicle that has two wheels positioned within a certain distance from the vehicle 100. For example, the two-wheeled vehicle OB13 may be a motorcycle or a bike on a sidewalk or the roadway.

The traffic signal may include a traffic light OB15, a traffic sign plate OB14, and a pattern or text painted on a road surface.

The light may be light generated by a lamp provided in the nearby vehicle. The light may be light generated by a street lamp. The light may be solar light.

The road may include a road surface, a curve, and slopes, such as an upward slope and a downward slope.

The structure may be a body that is disposed around the road and is fixed onto the ground. For example, the structure may include a street lamp, a roadside tree, a building, a telephone pole, a traffic light, and a bridge, a curb, and a wall.

The geographical feature may include a mountain and a hill.

Meanwhile, the object may be classified into a movable object and a stationary object. For example, the movable object may include a moving nearby vehicle and a moving pedestrian. For example, the stationary object may include a traffic signal, a road, a structure, a stationary vehicle, and a stationary pedestrian.

The object detection device 300 may include a camera 310, a radar 320, a lidar 330, an ultrasonic sensor 340, an infrared sensor 350, and a processor 370.

According to an embodiment, the object detection device 300 may further include other components in addition to the mentioned components, or may not include some of the mentioned components.

The camera 310 may be disposed at an appropriate position outside the vehicle 100 in order to acquire images of the outside of the vehicle 100. The camera 310 may be a mono camera, a stereo camera 310a, an Around View Monitoring (AVM) camera 310b, or a 360-degree camera.

Further, the camera 310 may acquire location information of an object, information on a distance to the object, or information on a relative speed to the object, by using various image processing algorithms.

For example, the camera 310 may acquire the information on the distance to the object and information on the relative speed to the object, based on change over time in size of the object, from the acquired image.

For example, the camera 310 may acquire the information on the distance to the object and information on the relative speed to the object, by using a pin hole model or profiling a road surface.

For example, the camera 310 may acquire the information on the distance to the object and the information on the relative speed to the object, based on information on disparity, from stereo image acquired by a stereo camera 310a.

For example, the camera 310 may be disposed near a front windshield in the vehicle 100 in order to acquire images of the front of the vehicle 100. Alternatively, the camera 310 may be disposed around a front bumper or a radiator grill.

For example, the camera 310 may be disposed near a rear glass in the vehicle 100 in order to acquire images of the rear of the vehicle 100. Alternatively, the camera 310 may be disposed around a rear bumper, a trunk, or a tailgate.

For example, the camera 310 may be disposed near at least one of the side windows in the vehicle 100 in order to acquire images of the lateral side of the vehicle 100. Alternatively, the camera 310 may be disposed around a side mirror, a fender, or a door.

The camera 310 may provide an acquired image to the processor 370.

The radar 320 may include an electromagnetic wave transmission unit and an electromagnetic wave reception unit. The radar 320 may be implemented by a pulse radar scheme or a continuous wave radar scheme depending on the principle of emission of an electronic wave. The radar 320 may be implemented by a Frequency Modulated Continuous Wave (FMCW) scheme or a Frequency Shift Keying (FSK) scheme depending on the waveform of a signal.

The radar 320 may detect an object by using an electromagnetic wave as medium based on a time of flight (TOF) scheme or a phase-shift scheme, and may detect a position of the detected object, the distance to the detected object, and the relative speed to the detected object.

The radar 320 may be disposed at an appropriate position outside the vehicle 100 in order to detect an object disposed in front of the vehicle 100, in the rear side of the vehicle 100, or in the lateral side of the vehicle 100.

The lidar 330 may include a laser transmission unit and a laser reception unit. The lidar 330 may be implemented by the Time of Flight (TOF) scheme or the phase-shift scheme.

The lidar 330 may be implemented as a drive type lidar or a non-drive type lidar. When implemented as the drive type lidar, the lidar 300 may rotate by a motor and detect an object in the vicinity of the vehicle 100.

When implemented as the non-drive type lidar, the lidar 300 may detect an object disposed within a certain range based on the vehicle 100, due to a light steering. The vehicle 100 may include a plurality of non-drive type lidars 330.

The lidar 330 may detect an object through the medium of laser light by employing the TOF scheme or the phase-shift scheme, and may detect a position of the detected object, the distance to the detected object, and the relative speed to the detected object.

The lidar 330 may be disposed at an appropriate position outside the vehicle 100 in order to detect an object disposed in front of the vehicle 100, disposed in the rear side of the vehicle 100, or in the lateral side of the vehicle 100.

The ultrasonic sensor 340 may include an ultrasonic wave transmission unit and an ultrasonic wave reception unit. The ultrasonic sensor 340 may detect an object based on an ultrasonic wave, and may detect a position of the detected object, the distance to the detected object, and the relative speed to the detected object.

The ultrasonic sensor 340 may be disposed at an appropriate position outside the vehicle 100 in order to detect an object disposed in front of the vehicle 100, disposed in the rear side of the vehicle 100, or in the lateral side of the vehicle 100.

The infrared sensor 350 may include an infrared light transmission unit and an infrared light reception unit. The infrared sensor 350 may detect an object based on infrared light, and may detect a position of the detected object, the distance to the detected object, and the relative speed to the detected object.

The infrared sensor 350 may be disposed at an appropriate position outside the vehicle 100 in order to detect an object disposed in front of the vehicle 100, disposed in the rear side of the vehicle 100, or in the lateral side of the vehicle 100.

The processor 370 may control the overall operation of each unit of the object detection device 300.

The processor 370 may detect and classify an object by comparing data sensed by the camera 310, the radar 320, the lidar 330, the ultrasonic sensor 340, and the infrared sensor 350 with pre-stored data.

The processor 370 may detect and track an object based on acquired images. The processor 370 may calculate the distance to the object, the relative speed to the object, and the like by using image processing algorithms.

For example, the processor 370 may acquire information on the distance to the object and information on the relative speed to the object, based on change over time in size of the object, from the acquired image.

For example, the processor 370 may acquire information on the distance to the object or information on the relative speed to the object by employing a pin hole model or by profiling a road surface.

For example, the processor 370 may acquire information on the distance to the object and information on the relative speed to the object based on information on disparity from the stereo image acquired by the stereo camera 310a.

The processor 370 may detect and track an object, based on a reflection electromagnetic wave which is formed as a transmitted electromagnetic wave is reflected by the object and returned. Based on the electromagnetic wave, the processor 370 may calculate the distance to the object, the relative speed to the object, and the like.

The processor 370 may detect and track an object based on a reflection laser light which is formed as a transmitted laser light is reflected by the object and returned. Based on the laser light, the processor 370 may calculate the distance to the object, the relative speed to the object, and the like.

The processor 370 may detect and track an object based on a reflection ultrasonic wave which is formed as a transmitted ultrasonic wave is reflected by the object and returned. Based on the ultrasonic wave, the processor 370 may calculate the distance to the object, the relative speed to the object, and the like.

The processor 370 may detect and track an object based on reflection infrared light which is formed as a transmitted infrared light is reflected by the object and returned. Based on the infrared light, the processor 370 may calculate the distance to the object, the relative speed to the object, and the like.

According to an embodiment, the object detection device 300 may include a plurality of processors 370 or may not include the processor 370. For example, each of the camera 310, the radar 320, the lidar 330, the ultrasonic sensor 340, and the infrared sensor 350 may include its own processor individually.

When the object detection device 300 does not include the processor 370, the object detection device 300 may operate under the control of the controller 170 or a processor inside the vehicle 100.

The object detection device 300 may operate under the control of the controller 170.

The communication device 400 is an apparatus for performing communication with an external device. Here, the external device may be a nearby vehicle, a mobile terminal, or a server.

In order to perform communication, the communication device 400 may include at least one of a transmission antenna, a reception antenna, a Radio Frequency (RF) circuit capable of implementing various communication protocols, and an RF device.

The communication device 400 may include a short-range communication unit 410, a location information unit 420, a V2X communication unit 430, an optical communication unit 440, a broadcasting transmission and reception unit 450, an Intelligent Transport Systems (ITS) communication unit 460, and a processor 470.

According to an embodiment, the communication device 400 may further include other components in addition to the mentioned components, or may not include some of the mentioned components.

The short-range communication unit 410 is configured to perform short-range communication. The short-range communication unit 410 may support short-range communication by using at least one of Bluetooth™, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless Universal Serial Bus (Wireless USB).

The short-range communication unit 410 may form wireless area networks to perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing wireless communication with a server (vehicle to infra (V2I) communication), a nearby vehicle (vehicle to vehicle (V2V) communication), or a pedestrian (vehicle to pedestrian (V2P) communication). The V2X communication unit 430 may include an RF circuit capable of implementing protocols for a communication with the infra (V2I), an inter-vehicle communication (V2V), and a communication with the pedestrian (V2P).

The optical communication unit 440 is a unit for performing communication with an external device by using light as medium. The optical communication unit 440 may include a light emitting unit, which converts an electrical signal into an optical signal and transmits the optical signal to the outside, and a light reception unit which converts a received optical signal into an electrical signal.

According to an embodiment, the light emitting unit may be integrally formed with a lamp included in the vehicle 100.

The broadcasting transmission and reception unit 450 is a unit for receiving a broadcast signal from an external broadcasting management server or transmitting a broadcast signal to the broadcasting management server through a broadcasting channel. The broadcasting channel may include a satellite channel, and a terrestrial channel. The broadcast signal may include a TV broadcast signal, a radio broadcast signal, and a data broadcast signal.

The ITS communication unit 460 may exchange information, data, or signals with a traffic system. The ITS communication unit 460 may provide acquired information or data to the traffic system. The ITS communication unit 460 may receive information, data, or signals from the traffic system. For example, the ITS communication unit 460 may receive traffic information from the traffic system and provide the traffic information to the controller 170. For example, the ITS communication unit 460 may receive a control signal from the traffic system, and provide the control signal to the controller 170 or a processor provided in the vehicle 100.

The processor 470 may control the overall operation of each unit of the communication device 400.

According to an embodiment, the communication device 400 may include a plurality of processors 470, or may not include the processor 470.

When the communication device 400 does not include the processor 470, the communication device 400 may operate under the control of the controller 170 or a processor of other device inside of the vehicle 100.

In addition, the communication device 400 may implement a vehicle display device, together with the user interface apparatus 200. In this case, the vehicle display device may be referred to as a telematics device or an Audio Video Navigation (AVN) device.

The communication device 400 may operate under the control of the controller 170.

The driving manipulation device 500 is configured to receive a user input for driving.

In the case of manual mode, the vehicle 100 may operate based on a signal provided by the driving manipulation device 500.

The driving manipulation device 500 may include a steering input device 510, an acceleration input device 530, and a brake input device 570.

The steering input device 510 may receive an input of travel direction of the vehicle 100 from a user. It is preferable that the steering input device 510 is implemented in a form of a wheel to achieve a steering input through a rotation. According to an embodiment, the steering input device may be implemented in a form of a touch screen, a touch pad, or a button.

The acceleration input device 530 may receive an input for acceleration of the vehicle 100 from a user. The brake input device 570 may receive an input for deceleration of the vehicle 100 from a user. It is preferable that the acceleration input device 530 and the brake input device 570 are implemented in the form of a pedal. According to an embodiment, the acceleration input device or the brake input device may be implemented in the form of a touch screen, a touch pad, or a button.

The driving manipulation device 500 may operate under the control of the controller 170.

The vehicle drive device 600 is configured to electrically control the operation of various devices of the vehicle 100.

The vehicle drive device 600 may include a power train drive unit 610, a chassis drive unit 620, a door/window drive unit 630, a safety apparatus drive unit 640, a lamp drive unit 650, and an air conditioner drive unit 660.

According to an embodiment, the vehicle drive device 600 may further include other components in addition to the mentioned components, or may not include some of the mentioned components.

In addition, the vehicle drive device 600 may include a processor. Each unit of the vehicle drive device 600 may include its own processor individually.

The power train drive unit 610 may control the operation of a power train apparatus.

The power train drive unit 610 may include a power source drive unit 611 and a transmission drive unit 612.

The power source drive unit 611 may control a power source of the vehicle 100.

For example, when a fossil fuel-based engine is the power source, the power source drive unit 611 may perform electronic control of the engine. Thus, the output torque of the engine can be controlled. The power source drive unit 611 may adjust the output toque of the engine under the control of the controller 170.

For example, when an electric motor is the power source, the power source drive unit 611 may control the motor. The power source drive unit 610 may adjust the RPM, toque, and the like of the motor under the control of the controller 170. The transmission drive unit 612 may control a transmission. The transmission drive unit 612 may adjust the state of the transmission.

The transmission drive unit 612 may adjust a state of the transmission. The transmission drive unit 612 may adjust a state of the transmission to a drive (D), reverse (R), neutral (N), or park (P) state.

Meanwhile, when an engine is the power source, the transmission drive unit 612 may adjust a gear-engaged state, in the drive D state.

The chassis drive unit 620 may control the operation of a chassis

The chassis drive unit 620 may include a steering drive unit 621, a brake drive unit 622, and a suspension drive unit 623.

The steering drive unit 621 may perform electronic control of a steering apparatus provided inside the vehicle 100. The steering drive unit 621 may change the travel direction of the vehicle 100.

The brake drive unit 622 may perform electronic control of a brake apparatus provided inside the vehicle 100. For example, the brake drive unit 622 may reduce the speed of the vehicle 100 by controlling the operation of a brake disposed in a wheel.

Meanwhile, the brake drive unit 622 may control a plurality of brakes individually. The brake drive unit 622 may control the braking forces applied to the plurality of wheels to be different from each other.

The suspension drive unit 623 may perform electronic control of a suspension apparatus inside the vehicle 100. For example, when the road surface is uneven, the suspension drive unit 623 may control the suspension apparatus so as to reduce the vibration of the vehicle 100.

Meanwhile, the suspension drive unit 623 may control a plurality of suspensions individually.

The door/window drive unit 630 may perform electronic control of a door apparatus or a window apparatus inside the vehicle 100.

The door/window drive unit 630 may include a door drive unit 631 and a window drive unit 632.

The door drive unit 631 may control the door apparatus, and control opening or closing of a plurality of doors included in the vehicle 100. The door drive unit 631 may control opening or closing of a trunk or a tail gate. The door drive unit 631 may control opening or closing of a sunroof.

The window drive unit 632 may perform electronic control of the window apparatus and control opening or closing of a plurality of windows included in the vehicle 100.

The safety apparatus drive unit 640 may perform electronic control of various safety apparatuses provided inside the vehicle 100

The safety apparatus drive unit 640 may include an airbag drive unit 641, a seat belt drive unit 642, and a pedestrian protection equipment drive unit 643.

The airbag drive unit 641 may perform electronic control of an airbag apparatus inside the vehicle 100. For example, upon detection of a dangerous situation, the airbag drive unit 641 may control an airbag to be deployed.

The seat belt drive unit 642 may perform electronic control of a seatbelt apparatus inside the vehicle 100. For example, upon detection of a dangerous situation, the seat belt drive unit 642 may control passengers to be fixed onto seats 110FL, 110FR, 110RL, and 110RR by using a safety belt.

The pedestrian protection equipment drive unit 643 may perform electronic control of a hood lift and a pedestrian airbag. For example, upon detection of a collision with a pedestrian, the pedestrian protection equipment drive unit 643 may control the hood lift to be lifted up and the pedestrian airbag to be deployed.

The lamp drive unit 650 may perform electronic control of various lamp apparatuses provided inside the vehicle 100.

The air conditioner drive unit 660 can perform electronic control of an air conditioner inside the vehicle 100. For example, when the inner temperature of the vehicle 100 is high, the air conditioner drive unit 660 may operate the air conditioner to supply cool air to the inside of the vehicle.

In addition, the vehicle drive device 600 may include a processor. Each unit of the vehicle dive device 600 may include its own processor individually. The vehicle drive device 600 may operate under the control of the controller 170.

The operation system 700 is a system for controlling various operations of the vehicle 100. The operation system 700 may operate in the autonomous traveling mode.

The operation system 700 may include the traveling system 710, the parking out system 740, and the parking system 750.

According to an embodiment, the operation system 700 may further include other components in addition to the mentioned components, or may not include some of the mentioned component.

Meanwhile, the operation system 700 may include a processor. Each unit of the operation system 700 may include its own processor.

Meanwhile, according to an embodiment, when the operation system 700 is implemented in software, it may be a subordinate concept of the controller 170.

According to an embodiment, the operation system 700 may be a concept including at least one of the user interface apparatus 200, the object detection device 300, the communication device 400, the driving manipulation device 500, the vehicle drive device 600, the navigation system 770, and the sensing unit 120, and the controller 170.

The traveling system 710 may perform traveling of the vehicle 100. The traveling system 710 may perform traveling of the vehicle 100, by receiving navigation information from the navigation system 770 and providing a control signal to the vehicle drive device 600.

The traveling system 710 may perform traveling of the vehicle 100, by receiving object information from the object detection device 300, and providing a control signal to the vehicle drive device 600.

The traveling system 710 may perform traveling of the vehicle 100, by receiving a signal from an external device through the communication device 400 and providing a control signal to the vehicle drive device 600.

The traveling system 710 may include at least one of the user interface apparatus 270, the object detection device 300, the communication device 400, the driving manipulation device 500, the vehicle drive device 600, the navigation system 770, the sensing unit 120, and the controller to perform traveling of the vehicle 100.

Such a traveling system 710 may be referred to as a vehicle traveling control apparatus.

The parking-out system 740 may perform the parking-out of the vehicle 100.

The parking-out system 740 may move the vehicle 100 out of a parking space, by receiving navigation information from the navigation system 770 and providing a control signal to the vehicle drive device 600.

The parking-out system 740 may move the vehicle 100 out of a parking space, by receiving object information from the object detection device 300 and providing a control signal to the vehicle drive device 600.

The parking-out system 740 may move the vehicle 100 out of a parking space, by receiving a signal from an external device and providing a control signal to the vehicle drive device 600.

The parking-out system 740 may include at least one of the user interface apparatus 270, the object detection device 300, the communication device 400, the driving manipulation device 500, the vehicle drive device 600, the navigation system 770, the sensing unit 120, and the controller 170 to move the vehicle 100 out of a parking space. Such a parking-out system 740 may be referred to as a vehicle parking-out control apparatus.

The parking system 750 may park the vehicle 100.

The parking system 750 may park the vehicle 100, by receiving navigation information from the navigation system 770 and providing a control signal to the vehicle drive device 600.

The parking system 750 may park the vehicle 100, by receiving object information from the object detection device 300 and providing a control signal to the vehicle drive device 600.

The parking system 750 may park the vehicle 100, by receiving a signal from an external device through the communication device 400, and providing a control signal to the vehicle drive device 600.

The parking system 750 may include at least one of the user interface apparatus 270, the object detection device 300, the communication device 400, the driving manipulation device 500, the vehicle drive device 600, the navigation system 770, the sensing unit 120, and the controller 170 to park the vehicle 100 in a parking space.

Such a parking system 750 may be referred to as a vehicle parking control apparatus.

The navigation system 770 may provide navigation information.

The navigation system 770 may include at least one of map information, information on set destination, path information due to the set destination, information on various objects on the path, lane information, and information on the current position of vehicle.

The navigation system 770 may include a memory and a processor. The memory may store navigation information. The processor may control the operation of the navigation system 770.

According to an embodiment, the navigation system 770 may also update pre-stored information by receiving information from an external device through the communication device 400.

According to an embodiment, the navigation system 770 may be classified as an element of the user interface apparatus 200.

The sensing unit 120 may sense the condition of the vehicle. The sensing unit 120 may include an inertial navigation unit (IMU) sensor, a collision sensor, a wheel sensor, a speed sensor, a tilt sensor, a weight sensor, a heading sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, a brake pedal position sensor, and the like.

Meanwhile, the inertial navigation unit (IMU) sensor may include at least one of an acceleration sensor, a gyro sensor, and a magnetic sensor.

The sensing unit 120 may also acquire sensing signals related to vehicle posture information, vehicle motion information, vehicle yaw information, vehicle roll information, vehicle pitch information, vehicle collision information, vehicle direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, vehicle external illumination information, information on the pressure applied to accelerator pedal, information on the pressure applied to brake pedal, and the like.

The sensing unit 120 may further include an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, a Crank Angle Sensor (CAS), and the like.

The sensing unit 120 may generate vehicle condition information based on sensing data. The vehicle condition information may be information that is generated based on data sensed by a variety of sensors provided inside a vehicle.

For example, the vehicle condition information may include vehicle posture information, vehicle speed information, vehicle tilt information, vehicle weight information, vehicle direction information, vehicle battery information, vehicle fuel information, vehicle tire pressure information, vehicle steering information, in-vehicle temperature information, in-vehicle humidity information, pedal position information, vehicle engine temperature information, etc.

The interface 130 may serve as a passage for various types of external devices that are connected to the vehicle 100. For example, the interface 130 may have a port that is connectable to a mobile terminal and may be connected to the mobile terminal via the port. In this case, the interface 130 may exchange data with the mobile terminal.

Meanwhile, the interface 130 may serve as a passage for the supply of electrical energy to a mobile terminal connected thereto. When the mobile terminal is electrically connected to the interface 130, the interface 130 may provide electrical energy, supplied from the power supply unit 190, to the mobile terminal under the control of the controller 170.

The memory 140 is electrically connected to the controller 170. The memory 140 may store basic data for each unit, control data for the operation control of each unit, and input/output data. The memory 140 may be various storage devices, in hardware, such as a ROM, a RAM, an EPROM, a flash drive, a hard drive, and the like. The memory 140 may store various data for the overall operation of the vehicle 100, such as programs for the processing or control of the controller 170.

According to an embodiment, the memory 140 may be integrally formed with the controller 170, or may be provided as an element of the controller 170.

The controller 170 may control the overall operation of each unit inside the vehicle 100. The controller 170 may be referred to as an Electronic Control Unit (ECU).

The power supply unit 190 may supply power required to operate each component under the control of the controller 170. In particular, the power supply unit 190 may receive power from a battery or the like inside the vehicle 100.

At least one processor and the controller 170 included in the vehicle 100 may be implemented by using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

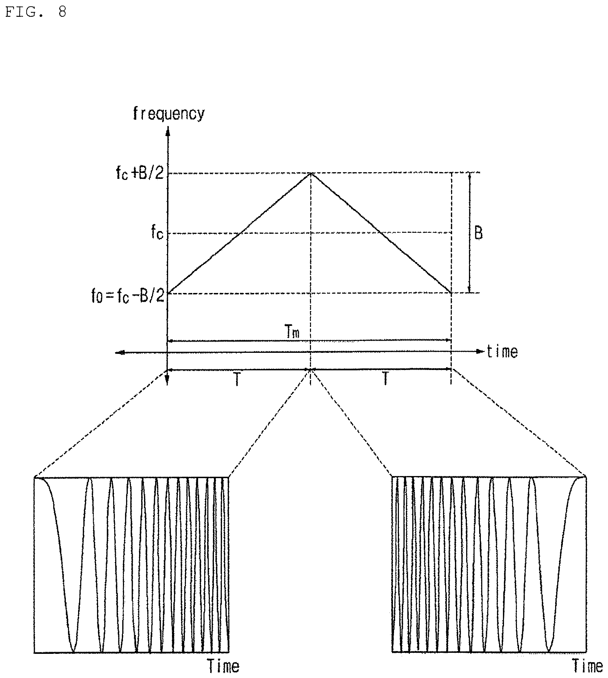

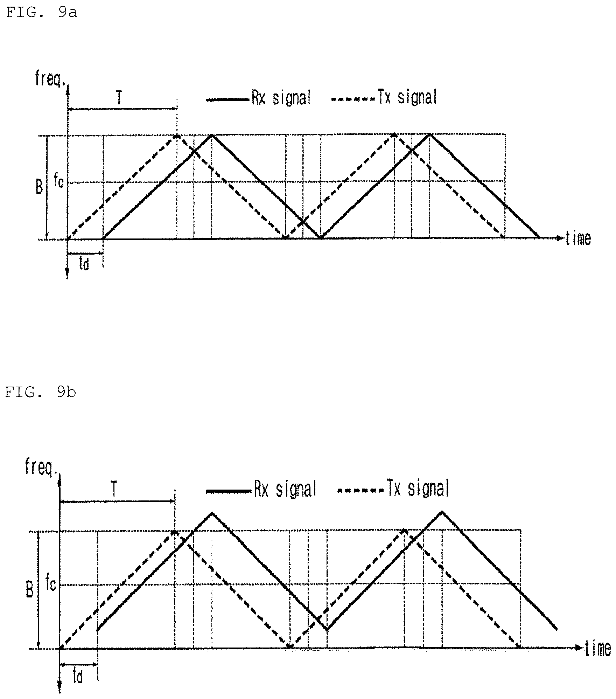

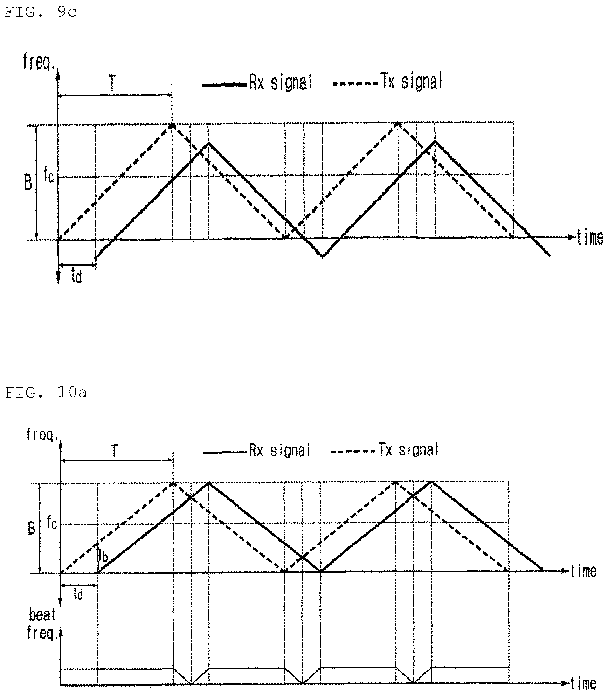

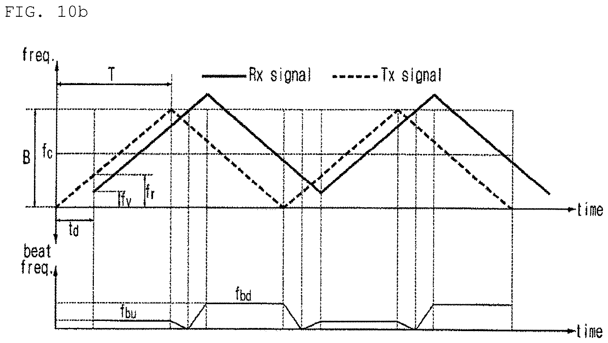

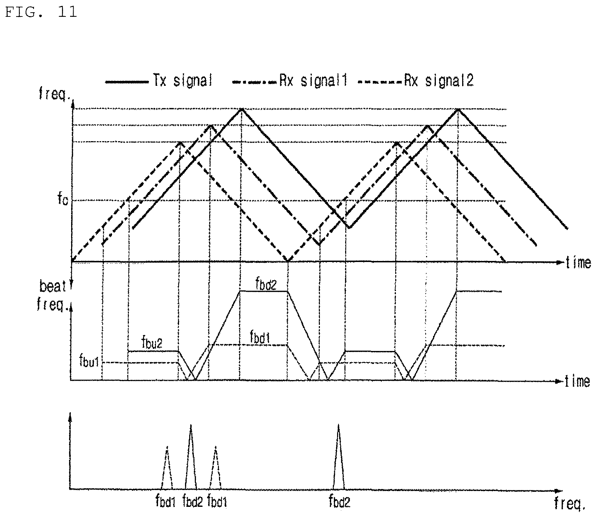

FIG. 8 is a diagram illustrating an example of a transmission signal according to an embodiment of the present invention. FIG. 9 is a diagram illustrating a transmission frequency and a reception frequency according to an embodiment of the present invention. FIG. 10 is a diagram illustrating a beat frequency according to an embodiment of the present invention. FIG. 11 is a diagram illustrating the principle of detecting distance and speed by using a beat frequency according to an embodiment of the present invention.

The operation of calculating a relative distance to the object and a relative speed to the object will be described with reference to FIGS. 8 to 11.

Referring to FIG. 8, the radar apparatus 320 according to an embodiment of the present invention may transmit a triangular wave shaped frequency-modulated continuous wave as shown in the drawing.

A signal transmitted in the form of FIG. 8 is reflected in the object, and the radar apparatus 320 acquires a reception signal reflected in the object.

The radar apparatus 320 may analyze a frequency (hereinafter, referred to as a "beat frequency") spectrum of a beat signal (e.g., a time domain signal indicating a difference between the frequency of a reception signal and the frequency of a transmission signal) acquired by the reception signal and the transmission signal, and acquire distance information to the object and speed information. Here, fc is a center frequency, fO is a start frequency, B is a modulation bandwidth, and Tm is a modulation period.

FIGS. 9A to 9C are diagrams illustrating the relationship between the frequency (hereinafter, referred to as transmission frequency) of the transmission signal and the frequency (hereinafter, referred to as reception frequency) of the reception signal, on a time axis. FIG. 9A illustrates a case where the object is stopped, FIG. 9B illustrates a case where the object approaches the radar apparatus, and FIG. 9C illustrates a case where the object is away from the radar apparatus. Here, td is a delay time between the transmission signal and the reception signal, and is determined by the distance between the object and the radar apparatus.

FIGS. 10A and 10B are diagrams illustrating a relationship between the frequency of the transmission signal and the frequency of the reception signal and a beat frequency according to the above mentioned relationship, on the time axis. FIG. 10A corresponds to a static situation as shown in FIG. 9A, and FIG. 10B corresponds to a dynamic situation as shown in FIG. 9B. Here, the beat frequency fb is acquired by a difference between the transmission frequency and the reception frequency.

In the static situation as shown in FIG. 10A, the beat frequency is determined by the delay time according to the distance between the object and the radar apparatus. On the other hand, in the dynamic situation shown in FIG. 10B, the Doppler frequency shift phenomenon occurs as the relative speed between the object and the radar apparatus changes. Thus, the beat frequency is formed of a combination of a distance beat frequency fr and a Doppler frequency fd. Therefore, fbu and fbd shown in FIG. 3B are constituted of a combination of the fr and fd.

The beat frequency includes an up-beat frequency corresponding to an up chirp and a down-beat frequency corresponding to a down chirp. The up-beat frequency and the down-beat frequency include a frequency shifts component due to a distance of the moving target and a relative speed. These components are referred to as a range beat frequency and a Doppler frequency, respectively. The up-beat frequency and the down-beat frequency may be indicated by a combination of a distance beat frequency and a Doppler frequency as shown in Equations 1 and 2.

$$[Equation\ 1]$$

$$fbu = fr + fd$$

$$[Equation\ 2]$$

$$fbd = fr - fd$$

fbu is the up-beat frequency, fbd is the down-beat frequency, fr is the distance beat frequency, and fd is the Doppler frequency.

A negative Doppler frequency indicates that the object is approaching the radar apparatus 320, and a positive Doppler frequency indicates that the object is moving away from the radar apparatus 320. As a result, the distance to the object and the speed can be calculated by using the distance beat frequency and the Doppler frequency, respectively.

Meanwhile, the operations described with reference to FIGS. 8 to 11 may be accomplished in a processor 327 described later.

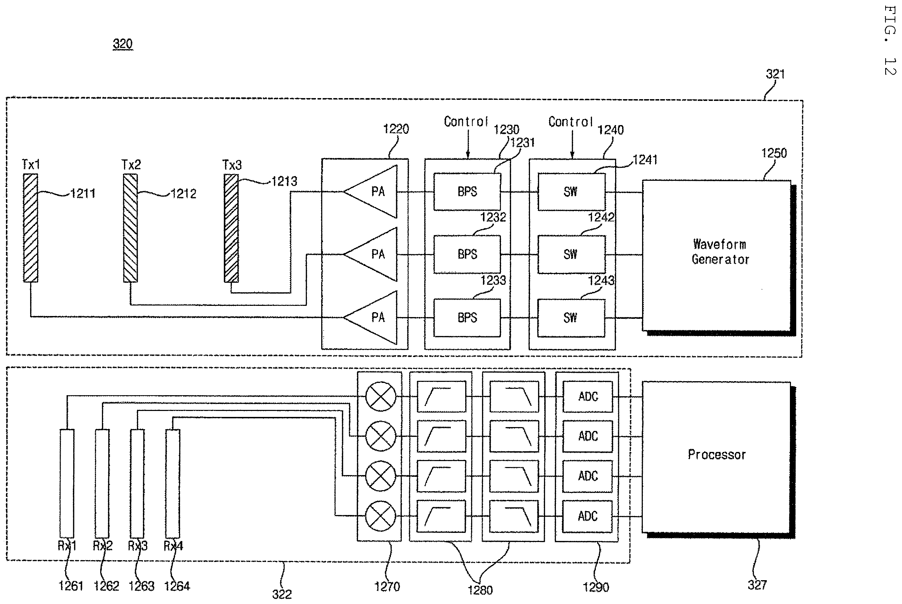

FIG. 12 is a diagram illustrating a vehicle radar apparatus according to an embodiment of the present invention.

Referring to FIG. 12, the vehicle radar apparatus 320 may include a transmission unit 321, a reception unit 322, and a processor 327.

The transmission unit 321 may transmit a transmission signal.

The transmission unit 321 may include a high-frequency circuit for transmitting a transmission signal.

The transmission unit 321 may include a plurality of transmission antennas 1211, 1212 and 1213, a power amplifier 1220, a code generator 1230, 1240 and a waveform generator 1250.

The plurality of transmission antennas 1211, 1212, and 1213 may constitute an array antenna.

In FIG. 12, it is illustrated that the transmission unit 321 includes three antennas as the transmission antenna, but the number of antennas is not limited.

In the plurality of transmission antennas 1211, 1212, and 1213, the arrangement interval in the azimuth direction can be determined based on the wavelength of a center frequency of the transmission signal.

For example, the arrangement interval of the plurality of transmission antennas 1211, 1212, and 1213 may be twice as long as the wavelength of the center frequency of the transmission signal in the azimuth direction.

The power amplifier (PA) 1220 may amplify an input signal.

The code generator 1230, 1240 may assign different codes to the plurality of antennas 1211, 1212, and 1213, respectively.

The code generators 1230, 1240 may include a switch 1240 and a binary phase shift (BPS) 1230.

The switch 1240 may generate a code by turning the input of signal on and off.

The binary phase shift 1230 may generate a code in accordance with the phase change.

The transmission unit 321 may assign different codes to the plurality of antennas 1211, 1212, and 1213 respectively, based on a combination of the codes generated in the switch 1240 and the binary phase shift 1230.

The code generator 1230, 1240 may include a plurality of switches 1241, 1242 and 1243 and a plurality of binary phase shifts 1231, 1232 and 1233.

The number of the plurality of switches 1241, 1242, and 1243 may be determined according to the number of the plurality of antennas 1211, 1212, and 1213.

The number of the plurality of binary phase shifts 1231, 1232, and 1233 may be determined according to the number of the plurality of antennas 1211, 1212, and 1213.

Unique codes may be assigned to the plurality of transmission antennas 1211, 1212, and 1213 by the code generator 1230 and 1240, respectively.

In the transmission unit 321, the arrangement interval of the plurality of transmission antennas 1211, 1212, and 1213 in the azimuth direction may be determined, based on the wavelength of the center frequency of the transmission signal.

For example, in the transmission unit 321, the plurality of transmission antennas 1211, 1212, and 1213 may have an arrangement interval, in the azimuth direction, that is twice as long as the wavelength of the center frequency of the transmission signal.

The center frequency of the transmission signal may be a center frequency of a frequency band used for the vehicle radar apparatus.

For example, the center frequency of the transmission signal may be any one of 24 GHz, 76.5 GHz, and 81 GHz.

The transmission unit 321 may include a first transmission antenna 1211, a second transmission antenna 1212, and a third transmission antenna 1213.

The first transmission antenna 1211 may transmit a first transmission signal including a first code generated in a first switch 1241 and a first binary phase shift 1231.

The second transmission antenna 1212 may transmit a second transmission signal including a second code generated in a second switch 1242 and a second binary phase shift 1232.

The third transmission antenna 1213 may transmit a third transmission signal including a third code generated in a third switch 1243 and a third binary phase shift 1233.

According to an embodiment, the transmission unit 321 may include two transmission antennas or may include four or more transmission antennas.

The waveform generator 1250 may generate a signal.

For example, the waveform generator 1250 may generate a waveform of a frequency modulated continuous wave (FMCW).

The reception unit 322 may receive a reception signal which is formed as the transmission signal is reflected in the object.

The reception unit 322 may include a high-frequency circuit for receiving a reception signal.

The reception unit 322 may include a plurality of reception antennas 1261, 1262, 1263 and 1264, a mixer 1270, a filter 1280, and an analogue digital converter (ADC) 1290.

The plurality of reception antennas 1261, 1262, 1263, and 1264 may constitute an array antenna.

In the plurality of reception antennas 1261, 1262, 1263, and 1264, the arrangement interval in the azimuth direction may be determined, based on the wavelength of the center frequency of the transmission signal.

For example, the arrangement interval of the plurality of reception antennas 1261, 1262, 1263, and 1264 may have a length of 0.4 to 0.6 times the center frequency wavelength of the transmission signal in the azimuth direction.

FIG. 12 illustrates that the reception unit 322 includes four antennas as the reception antenna. However, the number of antennas is not limited.

Each of the plurality of reception antennas 1261, 1262, 1263, and 1264 may receive a reception signal based on a signal transmitted from each of the plurality of transmission antennas 1211, 1212, and 1213.

In the reception unit 322, the arrangement interval of the plurality of reception antennas 1261, 1262, 1263, and 1264 may be determined in the azimuth direction, based on the wavelength of the center frequency of the transmission signal.

For example, in the transmission unit 322, in the azimuth direction, the plurality of reception antennas 1261, 1262, 1263, and 1264 may have an arrangement interval of 0.4 to 0.6 times the wavelength of the center frequency of the transmission signal.

The center frequency of the transmission signal may be the center frequency of the frequency band used for the vehicle radar apparatus.

For example, the center frequency of the transmission signal may be any one of 24 GHz, 76.5 GHz, and 81 GHz.

The reception unit 322 may include the first reception antenna 1261, the second reception antenna 1262, the third reception antenna 1263, and the fourth reception antenna 1264.

The first reception antenna 1261 may receive a reception signal based on a plurality of transmission signals transmitted from the plurality of transmission antennas 1211, 1212, and 1213, respectively.

For example, the first reception antenna 1261 may receive a first reception signal based on the first transmission signal transmitted from the first transmission antenna 1211, a second reception signal based on the second transmission signal transmitted from the second transmission antenna 1212, and a third reception signal based on the third transmission signal transmitted from the third transmission antenna 1213.

The second reception antenna 1262 may receive a reception signal based on a plurality of transmission signals transmitted from the plurality of transmission antennas 1211, 1212, and 1213, respectively.

For example, the second reception antenna 1262 may receive the first reception signal based on the first transmission signal transmitted from the first transmission antenna 1211, the second reception signal based on the second transmission signal transmitted from the second transmission antenna 1212, and the third reception signal based on the third transmission signal transmitted from the third transmission antenna 1213.

The second reception antenna 1262 may be arranged by a distance of 0.5 times the center frequency wavelength of the transmission signal in the azimuth direction from the first reception antenna 1261.

The third reception antenna 1263 may receive a reception signal based on a plurality of transmission signals transmitted from the plurality of transmission antennas 1211, 1212, and 1213, respectively.

For example, the third reception antenna 1263 may receive the first reception signal based on the first transmission signal transmitted from the first transmission antenna 1211, the second reception signal based on the second transmission signal transmitted from the second transmission antenna 1212, and the third reception signal based on the third transmission signal transmitted from the third transmission antenna 1213.

The third reception antenna 1263 may be arranged by a distance of 0.5 times the center frequency wavelength of the transmission signal in the azimuth direction from the second reception antenna 1262.

The third reception antenna 1263 may be arranged by a distance of one times the center frequency wavelength of the transmission signal in the azimuth direction from the first reception antenna 1261.

The fourth reception antenna 1264 may receive a reception signal based on a plurality of transmission signals transmitted from the plurality of transmission antennas 1211, 1212, and 1213, respectively.

For example, the fourth reception antenna 1264 may receive the first reception signal based on the first transmission signal transmitted from the first transmission antenna 1211, the second reception signal based on the second transmission signal transmitted from the second transmission antenna 1212, and the third reception signal based on the third transmission signal transmitted from the third transmission antenna 1213.

The fourth reception antenna 1264 may be arranged by a distance of 0.5 times the center frequency wavelength of the transmission signal in the azimuth direction from the third reception antenna 1263.

The fourth reception antenna 1264 may be arranged by a distance of 1.5 times the center frequency wavelength of the transmission signal in the azimuth direction from the first reception antenna 1261.

In the reception unit 322, the arrangement interval of the plurality of reception antennas 1261, 1262, 1263, and 1264 may be determined in the high-angle direction, based on the wavelength of the center frequency of the transmission signal.

For example, in the reception unit 322, at least a part of the plurality of reception antennas 1261, 1262, 1263, and 1264 is arranged, in the high-angle direction, by an interval of 0.5 times the center frequency wavelength of the transmission signal, from other part of the plurality of reception antennas 1261, 1262, 1263, and 1264.

The mixer 1270 may calculate by correlating a signal generated by the waveform generator 1250 and a signal received by the reception antenna 1261, 1262, 1263, and 1264, and output a difference between two signals.

The filter 1280 may filter a signal received by the mixer 1270.

According to an embodiment, the reception unit 322 may further include an amplifier.

The amplifier may amplify a signal received by the reception antennas 1261, 1262, 1263, 1264, and a signal received by the mixer or the filter.

The analog digital converter (ADC) 1290 may convert an analog signal to a digital signal.

Meanwhile, the transmission unit 321 and the reception unit 322 may be integrally formed.

The processor 327 may be electrically connected to each unit of the vehicle radar apparatus 320.

The processor 327 may control the overall operation of each unit of the vehicle radar apparatus 320.

The processor 327 may process the reception signal.

The vehicle radar apparatus 320 may further include an input unit, an interface, a memory, an output unit, and a power supply unit individually or in combination.

The explanation of the input unit 210 of the user interface apparatus 200 described with reference to FIGS. 1 to 7 may be applied to the present input unit.

In FIGS. 1 to 7, the input unit has been described as a component of the user interface apparatus 200, but the input unit may be classified as a component of the vehicle radar apparatus 320.

The interface may exchange at least one of information, data, and signal with other apparatus or system contained in the vehicle 100.

Specifically, the interface may exchange at least one of information, data, and signal with the user interface apparatus 200, the communication device 400, the driving manipulation device 500, the vehicle drive device 600, the operation system 700, the navigation system 770, the sensing unit 120, the memory 140, and the controller 170.

The memory may store various data for overall operation of the vehicle radar apparatus 320, such as a program for the processing or controlling of the processor 327. The memory may be, in hardware, various storage devices such as ROM, RAM, EPROM, flash drive, hard drive, and the like.

The explanation of the output unit 250 of the user interface apparatus 200 described with reference to FIGS. 1 to 7 may be applied to the present output unit.

In FIGS. 1 to 7, the output unit has been described as a component of the user interface apparatus 200, but the output unit may be classified as a component of the vehicle radar apparatus 320.

The power supply unit may supply power necessary for the operation of each component under the control of the processor 327. Particularly, the power supply unit may receive power from a battery inside the vehicle.

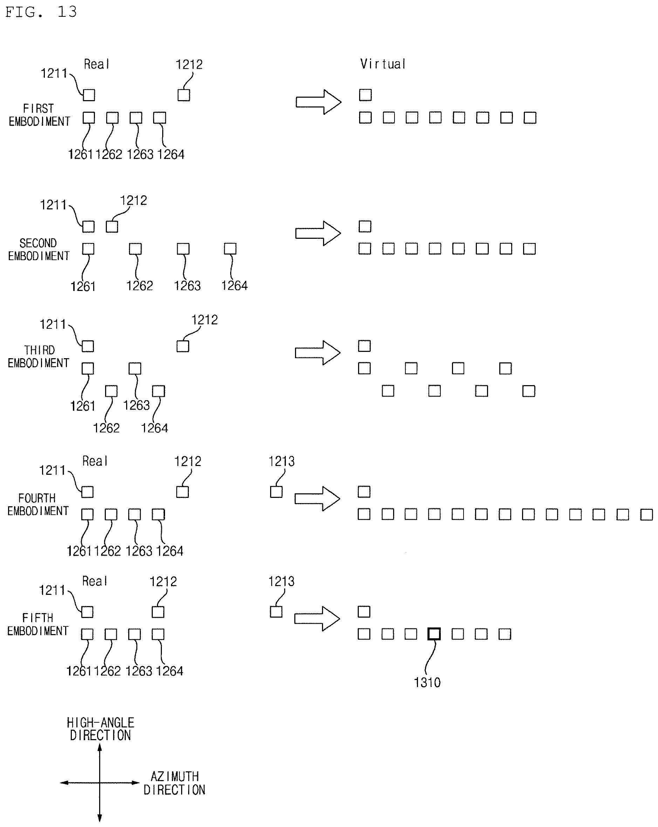

FIG. 13 is a diagram illustrating the arrangement of a plurality of transmission antennas and the arrangement of a plurality of reception antennas according to an embodiment of the present invention.

As the number of reception antennas is increased in the reception unit 322, more accurate data can be acquired with respect to the object.

When the number of reception antennas is physically increased, the entire size of the vehicle radar apparatus is inevitably increased. Therefore, there occurs a problem when it is mounted in a restricted space of the vehicle.

To overcome this problem, the embodiment of the present invention can implement a virtual array reception antenna by assigning a unique code to the plurality of transmission antennas and appropriately arranging the plurality of transmission antennas and the plurality of reception antennas.

Referring to FIG. 13, the arrangement interval of the plurality of transmission antennas 1211, 1212, and 1213 of the transmission unit 321 may be determined based on the wavelength of the center frequency of the transmission signal.

For example, the arrangement interval of the plurality of transmission antennas 1211, 1212, and 1213 in the azimuth direction may be determined based on the wavelength of the center frequency of the transmission signal.

For example, the arrangement interval of the plurality of transmission antennas 1211, 1212, and 1213 in the high-angle direction may be determined based on the wavelength of the center frequency of the transmission signal.

The interval of the plurality of reception antennas 1261, 1262, 1263, and 1264 of the reception unit 322 may be determined based on the wavelength of the center frequency of the transmission signal.

For example, the arrangement interval of the plurality of reception antennas 1261, 1262, 1263, and 1264 in the azimuth direction may be determined based on the wavelength of the center frequency of the transmission signal.

For example, the arrangement interval of the plurality of reception antennas 1261, 1262, 1263, and 1264 in the high-angle direction may be determined based on the wavelength of the center frequency of the transmission signal.

Hereinafter, various embodiments for the arrangement intervals of the plurality of transmission antennas and the plurality of reception antennas will be described.

<First embodiment>

The plurality of transmission antennas 1211 and 1212 may be arranged to be twice as long as the center frequency wavelength of the transmission signal, based on the azimuth direction.

The plurality of reception antennas 1261, 1262, 1263, and 1264 may be arranged to be 0.5 times as long as the center frequency wavelength of the transmission signal, based on the azimuth direction.

The plurality of reception antennas 1261, 1262, 1263, and 1264 may receive the reception signal based on the first transmission signal transmitted from the first transmission antenna 1211.

In addition, the plurality of reception antennas 1261, 1262, 1263, and 1264 may receive the reception signal based on the second transmission signal transmitted from the second transmission antenna 1212.

In this case, the array reception antenna physically constituted of four reception antennas 1261, 1262, 1263, and 1264 may implement a virtual array reception antenna constituted of eight reception antennas.

The plurality of antennas of the virtual array reception antenna may have an arrangement interval of 0.5 times the wavelength of the center frequency of the transmission signal, based on the azimuth direction.

<Second embodiment>

The plurality of transmission antennas 1211 and 1212 may be arranged to be 0.5 times as long as the center frequency wavelength of the transmission signal, based on the azimuth direction.

The plurality of reception antennas 1261, 1262, 1263, and 1264 may be arranged to be one times as long as the center frequency wavelength of the transmission signal, based on the azimuth direction.

The plurality of reception antennas 1261, 1262, 1263, and 1264 may receive the reception signal based on the first transmission signal transmitted from the first transmission antenna 1211.

The plurality of reception antennas 1261, 1262, 1263, and 1264 may receive the reception signal based on the second transmission signal transmitted from the second transmission antenna 1212.

In this case, the array reception antenna physically constituted of four reception antennas 1261, 1262, 1263, and 1264 may implement a virtual array reception antenna constituted of eight reception antennas.

The plurality of antennas of the virtual array reception antenna may have an arrangement interval of 0.5 times the wavelength of the center frequency of the transmission signal, based on the azimuth direction.

<Third embodiment>

The plurality of transmission antennas 1211 and 1212 may be arranged to be twice as long as the center frequency wavelength of the transmission signal, based on the azimuth direction.

The plurality of reception antennas 1261, 1262, 1263, and 1264 may be arranged to be 0.5 times as long as the center frequency wavelength of the transmission signal, based on the azimuth direction.

In addition, the plurality of reception antennas 1261, 1262, 1263, and 1264 may be arranged to be 0.5 times as long as the center frequency wavelength of the transmission signal, based on the high-angle direction.

The plurality of reception antennas 1261, 1262, 1263, and 1264 may receive the reception signal based on the first transmission signal transmitted from the first transmission antenna 1211.

In addition, the plurality of reception antennas 1261, 1262, 1263, and 1264 may receive the reception signal based on the second transmission signal transmitted from the second transmission antenna 1212.

In this case, the array reception antenna physically constituted of four reception antennas 1261, 1262, 1263, and 1264 may implement a virtual array reception antenna constituted of eight reception antennas.

The plurality of antennas of the virtual array reception antenna may have an arrangement interval of 0.5 times the wavelength of the center frequency of the transmission signal, based on the azimuth direction.

In addition, the plurality of antennas of the virtual array reception antenna may have an arrangement interval of 0.5 times the wavelength of the center frequency of the transmission signal, based on the high-angle direction.

<Fourth embodiment>

The plurality of transmission antennas 1211 and 1212 may be arranged to be twice as long as the center frequency wavelength of the transmission signal, based on the azimuth direction.

The plurality of reception antennas 1261, 1262, 1263, and 1264 may be arranged to be 0.5 times as long as the center frequency wavelength of the transmission signal, based on the azimuth direction.

The plurality of reception antennas 1261, 1262, 1263, and 1264 may receive the reception signal based on the first transmission signal transmitted from the first transmission antenna 1211.

In addition, the plurality of reception antennas 1261, 1262, 1263, and 1264 may receive the reception signal based on the second transmission signal transmitted from the second transmission antenna 1212.

In addition, the plurality of reception antennas 1261, 1262, 1263, and 1264 may receive the reception signal based on the third transmission signal transmitted from the third transmission antenna 1213.

In this case, the array reception antenna physically constituted of four reception antennas 1261, 1262, 1263, and 1264 may implement a virtual array reception antenna constituted of twelve reception antennas.

The plurality of antennas of the virtual array reception antenna may have an arrangement interval of 0.5 times the wavelength of the center frequency of the transmission signal, based on the azimuth direction.

<Fifth embodiment>

The plurality of transmission antennas 1211 and 1212 may be arranged to be 1.5 times as long as the center frequency wavelength of the transmission signal, based on the azimuth direction.

The plurality of reception antennas 1261, 1262, 1263, and 1264 may be arranged to be 0.5 times as long as the center frequency wavelength of the transmission signal, based on the azimuth direction.

The plurality of reception antennas 1261, 1262, 1263, and 1264 may receive the reception signal based on the first transmission signal transmitted from the first transmission antenna 1211.

In addition, the plurality of reception antennas 1261, 1262, 1263, and 1264 may receive the reception signal based on the second transmission signal transmitted from the second transmission antenna 1212.

In this case, the array reception antenna physically constituted of four reception antennas 1261, 1262, 1263, and 1264 may implement a virtual array reception antenna constituted of seven reception antennas.

An antenna 1310 positioned at the center of the seven reception antennas of the virtual array reception antenna may be an antenna that receives both of the first reception signal based on the first transmission signal of the first transmission antenna 1211 and the second reception signal based on the second transmission signal 1212 of the second transmission antenna 1212.

The plurality of antennas of the virtual array reception antenna may have an arrangement interval of 0.5 times the wavelength of the center frequency of the transmission signal, based on the azimuth direction.

With reference to FIG. 13, the arrangement of two or three transmission antennas and four reception antennas has been described as an example, but the number of transmission antennas and the number of reception antennas is not limited.

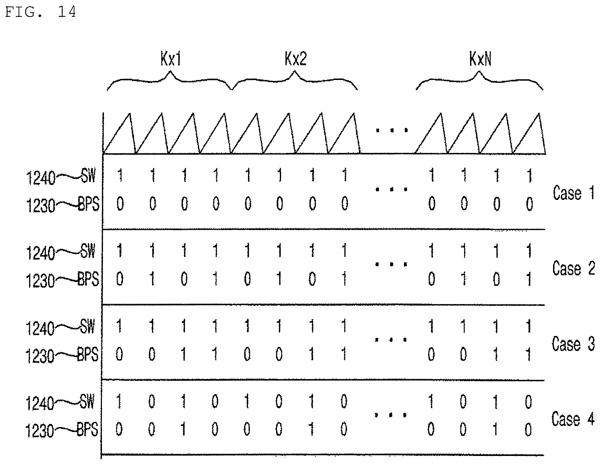

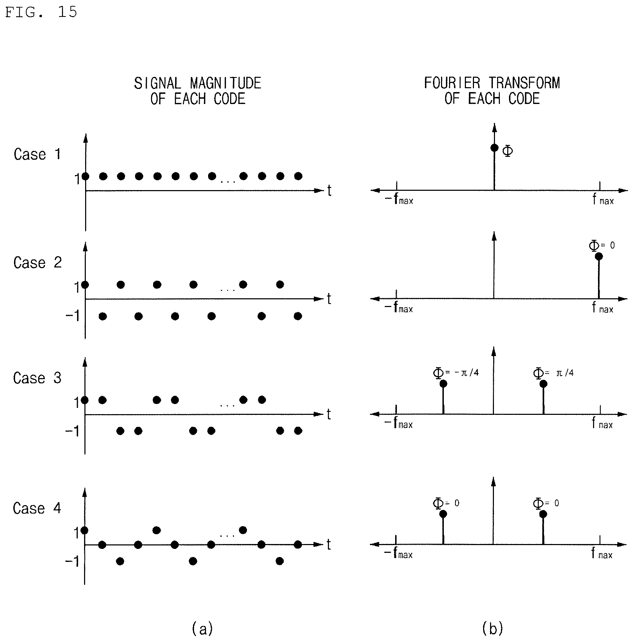

FIGS. 14 and 15 are diagrams illustrating a code of each of a plurality of transmission antennas of a vehicle radar apparatus according to an embodiment of the present invention.

Referring to FIG. 14, a symbol 1 in the switch 1240 indicates the on state of a signal inputted to the transmission antenna.

A symbol 0 in the switch 1240 indicates the off state of a signal inputted to the transmission antenna.

A symbol 0 in the binary phase shift 1230 indicates that the phase of the signal inputted to the transmission antenna is 0 degree. In this case, the magnitude of the signal is 1.

A symbol 1 in the binary phase shift 1230 indicates that the phase of the signal inputted to the transmission antenna is 180 degrees. In this case, the magnitude of the signal is -1.

FIG. 15A illustrates a signal magnitude distribution of the code generated according to each case of FIG. 14.

FIG. 15B illustrates a result of Fourier transforming the magnitude of the code generated according to each case of FIG. 14.

In this manner, a combination of various codes can be generated by using the switch 1240 and the binary phase shift 1230.

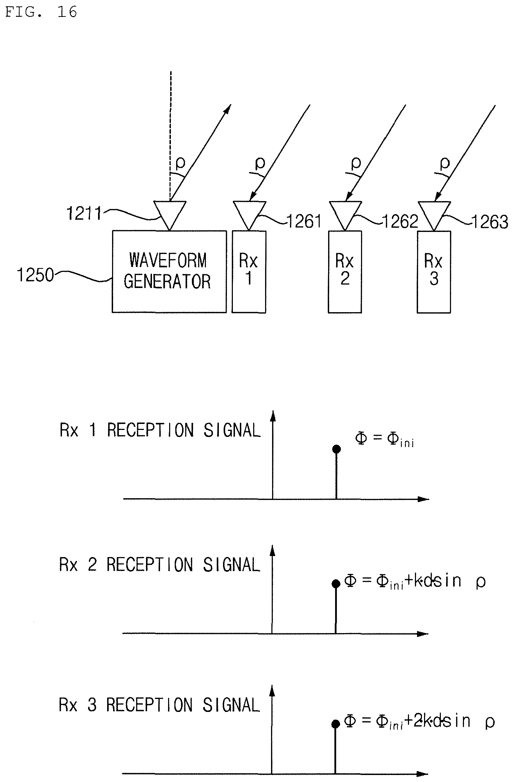

FIG. 16 is a diagram illustrating a case of one transmission antenna and three reception antennas according to an embodiment of the present invention.

FIG. 16 illustrates a signal acquired by a plurality of reception antennas when the object is positioned at a certain angle (ρ) with respect to the vehicle 100.

In the case of a radar apparatus having a waveform for modulating the frequency over time, the frequency of the signal is determined according to the relative distance between the radar apparatus and the object and the relative speed, and phase information of the frequency is determined according to the angle formed by the radar apparatus and the object.

The processor 327 may calculate angle information between the vehicle radar apparatus (or the vehicle) and the object by comparing the phase information of the reception signal acquired by each of the plurality of reception antennas 1261, 1262, and 1263.

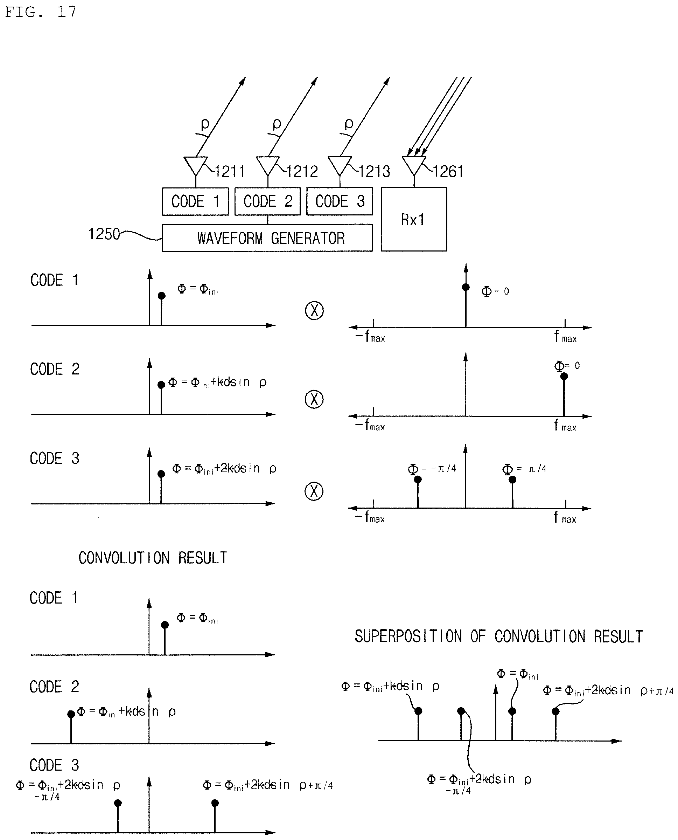

FIG. 17 illustrates a case of three transmission antennas and one reception antenna according to an embodiment of the present invention.

Referring to FIG. 17, the first transmission antenna 1211 may transmit the first transmission signal to which a first code generated by the code generator 1230, 1240 is assigned.

The first transmission signal may be a signal that has an effect that the signal generated in the waveform generator 1250 in the time domain is modulated with the first code (e.g., a case 1 in FIG. 15). In this case, a convolution result can be acquired in the frequency domain.

The second transmission antenna 1212 may transmit the second transmission signal to which a second code generated by the code generator 1230, 1240 is assigned.

The second transmission signal may be a signal having an effect that the signal generated in the waveform generator 1250 in the time domain is modulated with the second code (e.g., a case 2 in FIG. 15). In this case, the convolution result may be acquired in the frequency domain.

The third transmission antenna 1213 may transmit the third transmission signal to which a third code generated by the code generator 1230, 1240 is assigned.

The third transmission signal may be a signal having an effect that the signal generated in the waveform generator 1250 in the time domain is modulated with the third code (e.g., a case 3 in FIG. 15). In this case, the convolution result may be acquired in the frequency domain.

The first reception antenna 1261 may receive a first reception signal based on the first transmission signal, a second reception signal based on the second transmission signal, and a third reception signal based on the third transmission signal.

The first reception signal may be may be a signal having an effect that the signal generated in the waveform generator 1250 in the time domain is modulated with the first code (e.g., a case 1 in FIG. 15). In this case, the convolution result may be acquired in the frequency domain.

The second reception signal may be may be a signal having an effect that the signal generated in the waveform generator 1250 in the time domain is modulated with the second code (e.g., a case 2 in FIG. 15). In this case, the convolution result may be acquired in the frequency domain.

The third reception signal may be may be a signal having an effect that the signal generated in the waveform generator 1250 in the time domain is modulated with the third code (e.g., a case 3 in FIG. 15). In this case, the convolution result may be acquired in the frequency domain.

No interference occurs between the first reception signal, the second reception signal, and the third reception signal, due to the first code, the second code, and the third code.

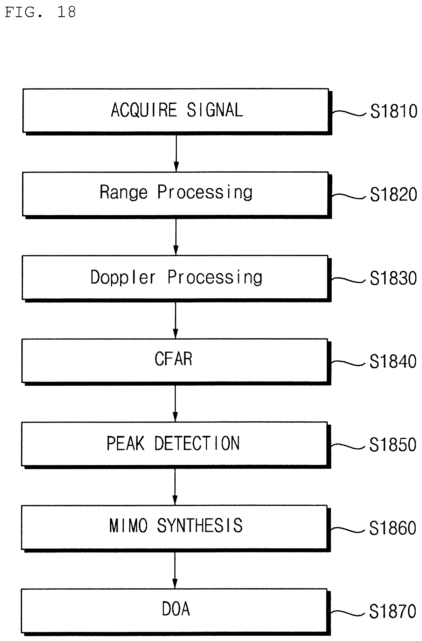

FIG. 18 is a diagram illustrating the operation of the vehicle radar apparatus according to an embodiment of the present invention.

FIG. 18 illustrates the operation of the processor 327 for calculating the relative distance, the relative speed, and the relative angle with respect to the object.

Referring to FIG. 18, the processor 327 may acquire a plurality of reception signals through a plurality of reception antennas 1261, 1262, 1263, and 1264 (S1810).

The processor 327 may perform range processing (S1820).

Range processing is a Fourier transform for each transmission Chirp signal.

The processor 327 may perform Doppler processing (S1830).

Doppler processing is the Fourier transform between each Chirp.

The processor 327 may perform Constant False Alarm Rate (CFAR) processing (S1840).

The processor 327 may detect the object through steps S1820, S1830 and S1840.

The processor 327 may perform Peak Detection processing (S1850).

When range processing and Doppler processing are performed for the reception signal, a 2D spectrum is generated.

When the reception signal is received through the four reception antennas 1261, 1262, 1263, and 1264, four 2D spectra are acquired.

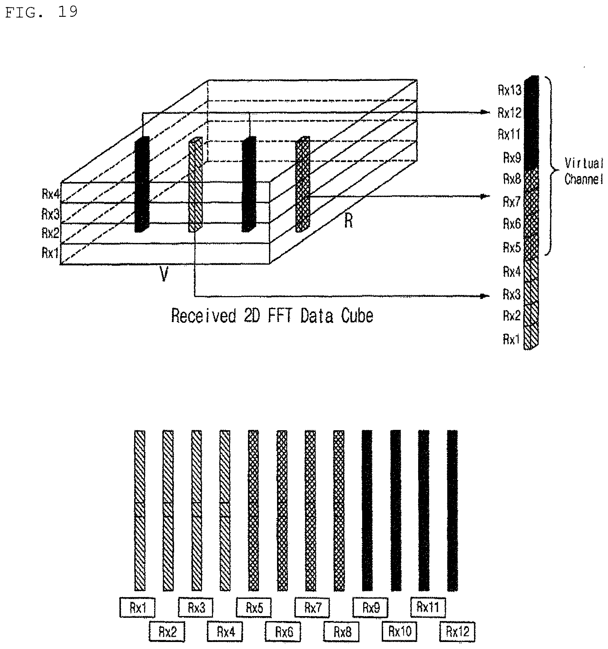

FIG. 19 is a diagram illustrating a 2D spectrum of a signal acquired through a virtual array reception antenna (e.g., a fourth embodiment of FIG. 13) including twelve reception antennas according to an embodiment of the present invention.

If there is a single object, when the range processing and the Doppler processing are performed, the spectrum as shown in FIG. 19 may be acquired.

The processor 327 may acquire four pieces of peak information for each 2D spectrum for a plurality of reception antennas 1261, 1262, 1263, and 1264, with respect to a single object.

The processor 327 may perform Multiple Input Multiple Output (MIMO) synthesis processing (S1860).

The processor 327 may appropriately allocate a peak based on the transmission signal transmitted from the plurality of transmission antennas 1211, 1212, and 1213, with respect to the detected four pieces of peak information.

Thus, the processor 327 may perform direction of angle (DOA) processing (S1870).

The processor 327 may generate angle information of the object.

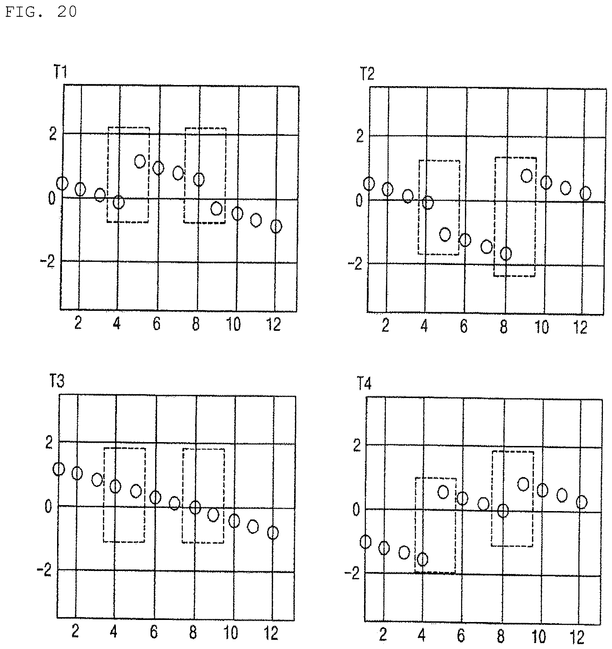

FIG. 20 is a diagram illustrating a phase distribution based on a reception signal according to an embodiment of the present invention.

Meanwhile, the processor 327 may determine whether data based on MIMO synthesis is reliable.

T3 in FIG. 20 illustrates a case where MIMO synthesis is properly accomplished, and T1, T2, and T4 illustrate a case where MIMO synthesis is not properly accomplished.

In the case of T1, T2, and T4, information on erroneous object may be generated.

In order to prevent such erroneous information generation, the processor 327 may compare the phase difference between the signals received by the plurality of antennas of the virtual array reception antenna.

The processor 327 may determine whether the phase difference between signals received by the plurality of antennas of the virtual array reception antenna is equal to or less than a reference value.

For example, the processor 327 may determine whether the phase difference between a fourth antenna and a fifth antenna among the plurality of antennas is equal to or less than a reference value.

For example, the processor 327 may determine whether the phase difference between an eighth antenna and a ninth antenna among the plurality of antennas is equal to or less than a reference value.

When it is determined that, as shown in T3 of FIG. 20, the phase difference between the fourth antenna and the fifth antenna is equal to or less than the reference value and the phase difference between the eighth antenna and the ninth antenna is equal to or less than the reference value, the processor 327 may generate information based on the reception signal.

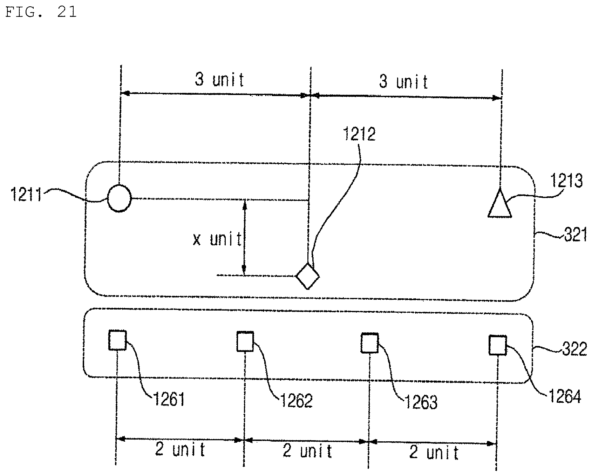

FIG. 21 is a diagram illustrating the arrangement of a plurality of transmission antennas and a plurality of reception antennas according to an embodiment of the present invention.

In the following description, 'unit' may be defined as a measure for indicating a length 0.5 to 0.7 times the center frequency of the transmission signal.

Referring to FIG. 21, in the transmission unit 321, the plurality of transmission antennas 1211, 1212, and 1213 may be arranged, in the azimuth direction (or in the horizontal direction), with an interval of 1.5 to 2.1 times the center frequency of the transmission signal

For example, the plurality of transmission antennas 1211, 1212, and 1213 may be spaced apart by 3 units in the azimuth direction (or in the horizontal direction).

In the transmission unit 321, at least a part of the plurality of transmission antennas 1211, 1212 and 1213 may be arranged at intervals of 0.5 to 3 times the center frequency of the transmission signal in the high-angle direction (or in the vertical direction).

For example, among the plurality of transmission antennas 1211, 1212, and 1213, the second antenna 1212 may be spaced apart by x unit from the first antenna 1211 and the third antenna 1213 in the high-angle direction (or in the vertical direction). Here, x may be 0.5 to 3 times longer than the center frequency wavelength.

In the reception unit 322, the plurality of reception antennas 1261, 1262, 1263 and 1264 may be arranged at intervals of 0.5 to 3 times the center frequency of the transmission signal in the azimuth direction (or in the horizontal direction).

For example, the plurality of reception antennas 1261, 1262, 1263, and 1264 may be spaced apart from each other by 2 units in the azimuth direction (or in the horizontal direction).

Meanwhile, the plurality of reception antennas 1261, 1262, 1263 and 1264 may be positioned in the azimuth direction (or in the horizontal direction) or in the high-angle direction (or in the vertical direction) of the plurality of transmission antennas 1211, 1212.

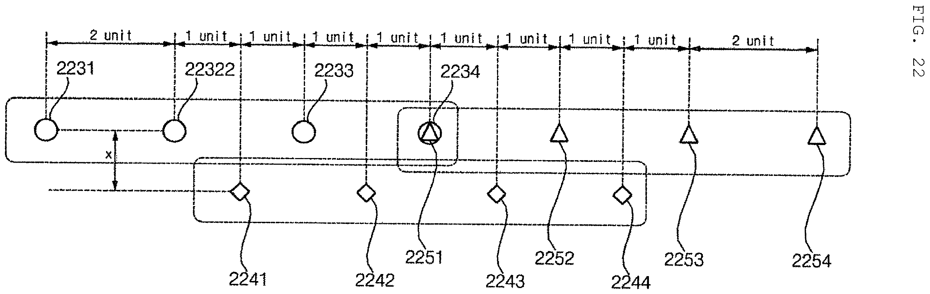

FIG. 22 is a diagram illustrating the arrangement of a plurality of transmission antennas and a plurality of reception antennas according to an embodiment of the present invention.

FIG. 22 illustrates a virtual array reception antenna according to an embodiment of the present invention.

Referring to FIG. 22, the first reception signal, which is a reflected signal of the first transmission signal transmitted from the first transmission antenna 1211 from the object, may be received by the plurality of reception antennas 1261, 1262, 1263, and 1264.

In this case, the plurality of reception antennas 1261, 1262, 1263, and 1264 may serve as the first to fourth antennas 2231, 2232, 2233, and 2234 of the virtual array reception antenna.

The second reception signal, which is a reflected signal of the second transmission signal transmitted from the second transmission antenna 1212 reflected in the object, may be received by the plurality of reception antennas 1261, 1262, 1263, and 1264.

In this case, the plurality of reception antennas 1261, 1262, 1263, and 1264 may serve as the fifth to eighth antennas 2241, 2242, 2243, and 2244 of the virtual array reception antenna.

The third reception signal, which is a reflected signal of the third transmission signal transmitted from the third transmission antenna 1213 reflected in the object, may be received by the plurality of reception antennas 1261, 1262, 1263, and 1264.

In this case, the plurality of reception antennas 1261, 1262, 1263, and 1264 may serve as ninth to twelfth antennas 2251, 2252, 2253, and 2254 of the virtual array reception antenna.

The reception signal has a phase change according to the distance of each of the plurality of transmission antennas 1211, 1212, and 1213.

Meanwhile, the fourth antenna 2234 receiving the first reception signal based on the first transmission signal transmitted from the first transmission antenna 1211 may superimpose and receive the third transmission signal based on the third transmission signal transmitted from the third transmission antenna 1213.

In the virtual array reception antenna, the fourth antenna 2234 may serve as a ninth antenna 2251.

The fourth antenna 2234 may be utilized to calibrate change due to the first transmission antenna 1211 and the third transmission antenna 1213.

Meanwhile, the first to fourth antennas 2231, 2232, 2233 and 2234 and the fifth to eighth antennas 2241, 2242, 2243 and 2244 may have a phase difference in the high-angle direction (or in the vertical direction). Here, the phase difference may be utilized to estimate the angle of high-angle of a target.

As illustrated in FIG. 21, the overall length in the horizontal direction of the actual plurality of reception antennas 1261, 1262, 1263, and 1264 is 6 units.

The overall length of the virtual array reception antenna in the horizontal direction is 12 units.

As described above, the arrangement of the plurality of transmission antennas 1211, 1212, and 1213 and the plurality of reception antennas 1261, 1262, 1263, and 1264 have the effect of extending the overall length of the plurality of reception antennas in the horizontal direction. Accordingly, more accurate angle information on object can be acquired.

The present invention described above can be implemented as computer readable codes on a medium on which a program is recorded. The computer readable medium includes all kinds of recording apparatuses in which data that can be read by a computer system is stored. Examples of the computer readable medium include a hard disk drive (HDD), a solid state disk (SSD), a silicon disk drive (SDD), a ROM, a RAM, a CD-ROM, a magnetic tape, a floppy disk, and may also be implemented in the form of a carrier wave (e.g., transmission over the Internet). In addition, the computer may include a processor or a controller. Accordingly, the above detailed description is to be considered in all respects as illustrative and not restrictive. The scope of the present invention should be determined by rational interpretation of the appended claims, and all changes within the scope of equivalents of the present invention are included in the scope of the present invention.

**Claims**

1. A radar apparatus for vehicle, the apparatus comprising:

   a transmission unit configured to transmit a transmission signal;
   a reception unit configured to receive a reception signal that is a reflected transmission signal by an object; and
   a processor configured to process the reception signal,
   wherein the transmission unit comprises:

   a plurality of transmission antennas; and
   a code generator configured to assign a different code to each of the plurality of antennas,
   wherein the reception unit comprises:
   a plurality of reception antennas, each of which receives a reception signal based on a signal transmitted from each of the plurality of transmission antennas.

2. The apparatus of claim 1, wherein the code generator comprises:

   a switch configured to generate a code by on and off of a signal input; and
   a binary phase shift (BPS) configured to generate a code according to a change in phase.

3. The apparatus of claim 2, wherein the transmission unit assigns a different code to each of the plurality of transmission antennas, based on a combination of the switch and the code generated in the binary phase shift.

4. The apparatus of claim 3, wherein, in the transmission unit, an arrangement interval of the plurality of transmission antennas is determined, in an azimuth direction, based on a wavelength of a center frequency of the transmission signal.

5. The apparatus of claim 4, wherein, in the transmission unit, the plurality of transmission antennas have an arrangement interval that is two times longer than the wavelength of the center frequency of the transmission signal in the azimuth direction.

6. The apparatus of claim 5, wherein the transmission unit comprises:

   a first transmission antenna configured to transmit a first transmission signal including a first code generated in a first switch and a first binary phase shift;
   a second transmission antenna configured to transmit a second transmission signal including a second code generated in a second switch and a second binary phase shift; and

a third transmission antenna configured to transmit a third transmission signal including a third code generated in a third switch and a third binary phase shift.

7. The apparatus of claim 1, wherein, in the reception unit, an arrangement interval of the plurality of reception antennas is determined, in an azimuth direction, based on a wavelength of a center frequency of the transmission signal.

8. The apparatus of claim 1, wherein, in the reception unit, the plurality of reception antennas have an arrangement interval of 0.4 to 0.6 times a wavelength of a center frequency of the transmission signal in an azimuth direction.

9. The apparatus of claim 8, wherein the reception unit comprises:

a first reception antenna configured to receive a reception signal based on a plurality of transmission signals respectively transmitted from the plurality of transmission antennas;

a second reception antenna configured to receive the reception signal based on the plurality of transmission signals respectively transmitted from the plurality of transmission antennas, and to be spaced apart from the first reception antenna by 0.5 times the center frequency of the transmission signal in the azimuth direction;

a third reception antenna configured to receive the reception signal based on the plurality of transmission signals respectively transmitted from the plurality of transmission antennas, and to be spaced apart from the second reception antenna by 0.5 times the center frequency of the transmission signal in the azimuth direction; and

a fourth reception antenna configured to receive the reception signal based on the plurality of transmission signals respectively transmitted from the plurality of transmission antennas, and to be spaced apart from the third reception antenna by 0.5 times the center frequency of the transmission signal in the azimuth direction.

10. The apparatus of claim 1, wherein, in the reception unit, at least a part of the plurality of reception antennas has an arrangement interval of 0.5 times a wavelength of a center frequency of the transmission signal in a high-angle direction.

11. The apparatus of claim 1, wherein, in the transmission unit, the plurality of transmission antennas are arranged at an interval of 1.5 to 2.1 times a wavelength of a center frequency of the transmission signal in an azimuth direction.

12. The apparatus of claim 11, wherein, in the transmission unit, at least a part of the plurality of transmission antennas are arranged at an interval of 0.5 to 3 times the wavelength of the center frequency of the transmission signal in a high-angle direction.

13. The apparatus of claim 12, wherein, in the reception unit, the plurality of reception antennas are arranged at an interval of 0.5 to 3 times the wavelength of the center frequency of the transmission signal in the azimuth direction.

14. The apparatus of claim 1, wherein the center frequency of the transmission signal is any one of 24 GHz, 76.5 GHz, and 81 GHz.

15. A vehicle comprising the radar apparatus of claim 1.

FIG. 1

HEIGHT
DIRECTION(H)

WIDTH
DIRECTION(W)

OVERALL-LENGTH
DIRECTION(L)

EP 3 543 736 A1

FIG. 2

310a

510

330 320

330 320

310b

22

FIG. 3

FIG. 4

FIG. 5

FIG. 6

FIG. 7

100

**USER INTERFACE APPARATUS** 270
- 200
- 210 — INPUT UNIT
  - 211 — VOICE INPUT UNIT
  - 212 — GESTURE INPUT UNIT
  - 213 — TOUCH INPUT UNIT
  - 214 — MECHANICAL INPUT UNIT
- 240
- 220 — INTERNAL CAMERA
- 230 — BIOMETRIC SENSING UNIT
- 250 — OUTPUT UNIT
  - 251 — DISPLAY UNIT
  - 252 — SOUND OUTPUT UNIT
  - 253 — HAPTIC OUTPUT UNIT

PROCESSOR

**OBJECT DETECTION DEVICE** 370
- 300
- 310 — CAMERA
- 320 — RADAR
- 330 — LIDAR
- 340 — ULTRASONIC SENSOR
- 350 — INFRARED SENSOR

PROCESSOR

**COMMUNICATION DEVICE** 470
- 400
- 410 — SHORT-RANGE COMMUNICATION UNIT
- 420 — LOCATION INFORMATION UNIT
- 430 — V2X COMMUNICATION UNIT
- 440 — OPTICAL COMMUNICATION UNIT
- 450 — BROADCASTING TRANSMISSION AND RECEPTION UNIT

PROCESSOR

**DRIVING MANIPULATION DEVICE**
- 500
- 510 — STEERING INPUT DEVICE
- 530 — ACCELERATION INPUT DEVICE
- 570 — BRAKE INPUT DEVICE

170

CONTROLLER

**VEHICLE DRIVE DEVICE** — 600
- POWER TRAIN DRIVE UNIT — 610
  - POWER SOURCE DRIVE UNIT — 611
  - TRANSMISSION DRIVE UNIT — 612
- CHASSIS DRIVE UNIT — 620
  - STEERING DRIVE UNIT — 621
  - BRAKE DRIVE UNIT — 622
  - SUSPENSION DRIVE UNIT — 623
- DOOR/WINDOW DRIVE UNIT — 630
  - DOOR DRIVE UNIT — 631
  - WINDOW DRIVE UNIT — 632
- SAFETY APPARATUS DRIVE UNIT — 640
  - AIRBAG DRIVE UNIT — 641
  - SEAT BELT DRIVE UNIT — 642
  - PEDESTRIAN PROTECTION EQUIPMENT DRIVE UNIT — 643
- LAMP DRIVE UNIT — 650
- AIR CONDITIONER DRIVE UNIT — 660

**OPERATION SYSTEM** — 700
- TRAVELING SYSTEM — 710
- PARKING OUT SYSTEM — 740
- PARKING SYSTEM — 750

NAVIGATION SYSTEM — 770

SENSING UNIT — 120

INTERFACE — 130

MEMORY — 140

POWER SUPPLY UNIT — 190

FIG. 8

FIG. 9a

FIG. 9b

FIG. 9c

FIG. 10a

FIG. 10b

FIG. 11

EP 3 543 736 A1

FIG. 12

33

FIG. 13

Real 1212
1211
FIRST
EMBODIMENT
1261 1262 1263 1264

Virtual

1211 1212
SECOND
EMBODIMENT
1261 1262 1263 1264

1211 1212
THIRD
EMBODIMENT
1261 1263
1262 1264

Real 1212
1211
1213
FOURTH
EMBODIMENT
1261 1262 1263 1264

Real 1212
1211
1213
FIFTH
EMBODIMENT
1261 1262 1263 1264
1310

HIGH-ANGLE
DIRECTION

AZIMUTH
DIRECTION

FIG. 14

|  | Kx1 | | | | Kx2 | | | | | KxN | | | |
|---|---|---|---|---|---|---|---|---|---|---|---|---|---|

| | | | | | | | | | | | | | | | |
|---|---|---|---|---|---|---|---|---|---|---|---|---|---|---|
| 1240—SW | 1 | 1 | 1 | 1 | 1 | 1 | 1 | 1 | ... | 1 | 1 | 1 | 1 | Case 1 |
| 1230—BPS | 0 | 0 | 0 | 0 | 0 | 0 | 0 | 0 | | 0 | 0 | 0 | 0 | |
| 1240—SW | 1 | 1 | 1 | 1 | 1 | 1 | 1 | 1 | ... | 1 | 1 | 1 | 1 | Case 2 |
| 1230—BPS | 0 | 1 | 0 | 1 | 0 | 1 | 0 | 1 | | 0 | 1 | 0 | 1 | |
| 1240—SW | 1 | 1 | 1 | 1 | 1 | 1 | 1 | 1 | ... | 1 | 1 | 1 | 1 | Case 3 |
| 1230—BPS | 0 | 0 | 1 | 1 | 0 | 0 | 1 | 1 | | 0 | 0 | 1 | 1 | |
| 1240—SW | 1 | 0 | 1 | 0 | 1 | 0 | 1 | 0 | ... | 1 | 0 | 1 | 0 | Case 4 |
| 1230—BPS | 0 | 0 | 1 | 0 | 0 | 0 | 1 | 0 | | 0 | 0 | 1 | 0 | |

FIG. 15

|  | SIGNAL MAGNITUDE OF EACH CODE | FOURIER TRANSFORM OF EACH CODE |

(a)                                    (b)

FIG. 16

Rx 1 RECEPTION SIGNAL

$\Phi = \Phi_{ini}$

Rx 2 RECEPTION SIGNAL

$\Phi = \Phi_{ini} + kds\ in\ \rho$

Rx 3 RECEPTION SIGNAL

$\Phi = \Phi_{ini} + 2kds\ in\ \rho$

FIG. 17

FIG. 18

```
┌─────────────────────────────────┐
│         ACQUIRE SIGNAL           │──── S1810
└─────────────────────────────────┘
                 │
                 ▼
┌─────────────────────────────────┐
│         Range Processing         │──── S1820
└─────────────────────────────────┘
                 │
                 ▼
┌─────────────────────────────────┐
│        Doppler Processing        │──── S1830
└─────────────────────────────────┘
                 │
                 ▼
┌─────────────────────────────────┐
│              CFAR                │──── S1840
└─────────────────────────────────┘
                 │
                 ▼
┌─────────────────────────────────┐
│         PEAK DETECTION           │──── S1850
└─────────────────────────────────┘
                 │
                 ▼
┌─────────────────────────────────┐
│         MIMO SYNTHESIS           │──── S1860
└─────────────────────────────────┘
                 │
                 ▼
┌─────────────────────────────────┐
│              DOA                 │──── S1870
└─────────────────────────────────┘
```

FIG. 19

Received 2D FFT Data Cube

FIG. 20

FIG. 21

FIG. 22

## INTERNATIONAL SEARCH REPORT

| | |
|---|---|
| International application No. |
| PCT/KR2017/013080 |

**A. CLASSIFICATION OF SUBJECT MATTER**

*G01S 13/93(2006.01)i, G01S 7/282(2006.01)i, G05D 1/02(2006.01)i, B60R 21/0134(2006.01)i*

According to International Patent Classification (IPC) or to both national classification and IPC

**B. FIELDS SEARCHED**

Minimum documentation searched (classification system followed by classification symbols)

G01S 13/93; G01S 17/88; G01S 13/89; G01S 13/92; G08G 1/127; H01Q 21/00; G01S 13/88; G01S 7/03; B60R 21/00; H01Q 21/08; G01S 7/282; G05D 1/02; B60R 21/0134

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: vehicle, radar, code, object, angle

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0050356 A (ACE TECHNOLOGIES CORP.) 11 May 2016<br>See paragraph [0056], claims 1, 7-8 and figure 4. | 1-15 |
| Y | KR 10-2014-0014099 A (ROBERT BOSCH GMBH.) 05 February 2014<br>See paragraphs [0009], [0011] and claim 1. | 1-15 |
| A | KR 10-2015-0055380 A (HYUNDAI MOBIS CO., LTD.) 21 May 2015<br>See claims 1-3 and figure 4. | 1-15 |
| A | KR 10-2014-0123270 A (METABUILD CO., LTD.) 22 October 2014<br>See claims 1-5 and figure 4. | 1-15 |
| A | KR 10-2011-0126939 A (MANDO CORPORATION) 24 November 2011<br>See paragraphs [0027]-[0031] and figure 2. | 1-15 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 MARCH 2018 (15.03.2018) | **15 MARCH 2018 (15.03.2018)** |
| Name and mailing address of the ISA/KR<br>Korean Intellectual Property Office<br>Government Complex-Daejeon, 189 Seonsa-ro, Daejeon 302-701,<br>Republic of Korea<br>Facsimile No. +82-42-481-8578 | Authorized officer<br><br><br>Telephone No. |

Form PCT/ISA/210 (second sheet) (January 2015)

EP 3 543 736 A1

INTERNATIONAL SEARCH REPORT
Information on patent family members

International application No.

PCT/KR2017/013080

| Patent document cited in search report | Publication date | Patent family member | Publication date |
|---|---|---|---|
| KR 10-2016-0050356 A | 11/05/2016 | NONE | |
| KR 10-2014-0014099 A | 05/02/2014 | CN 103282792 A | 04/09/2013 |
| | | CN 103282792 B | 22/06/2016 |
| | | DE 102010064346 A1 | 05/07/2012 |
| | | EP 2659285 A1 | 06/11/2013 |
| | | EP 2659285 B1 | 17/05/2017 |
| | | JP 2014-506325 A | 13/03/2014 |
| | | JP 5723025 B2 | 27/05/2015 |
| | | US 2013-0321196 A1 | 05/12/2013 |
| | | US 9638796 B2 | 02/05/2017 |
| | | WO 2012-089384 A1 | 05/07/2012 |
| KR 10-2015-0055380 A | 21/05/2015 | CN 104635228 A | 20/05/2015 |
| | | CN 104635228 B | 17/05/2017 |
| KR 10-2014-0123270 A | 22/10/2014 | KR 10-1480992 B1 | 14/01/2015 |
| KR 10-2011-0126939 A | 24/11/2011 | CN 102288971 A | 21/12/2011 |
| | | DE 102011101216 A1 | 24/11/2011 |
| | | US 2011-0285573 A1 | 24/11/2011 |

Form PCT/ISA/210 (patent family annex) (January 2015)

45